# EUROPÄISCHE PATENTSCHRIFT

(11) **EP 3 362 528 B1**
(45) Veröffentlichungstag und Bekanntmachung des Hinweises auf die Patenterteilung: **29.09.2021**
(21) Anmeldenummer: 16782210.5
(22) Anmeldetag: 13.10.2016
(51) Int. Cl.: C09J 7/26, C09J 7/38, C09J 153/02, C08L 53/02, C08L 91/00, B32B 5/18, B32B 27/06, B32B 27/30

(54) **SELBSTKLEBEARTIKEL UND DESSEN VERWENDUNG ZUR VERKLEBUNG AUF GESTRICHENER RAUFASERTAPETE**
SELF-ADHESIVE ARTICLE AND ITS USE FOR ADHERING ON INGRAIN WALLPAPER
ARTICLE AUTO-COLLANT ET SON UTILISATION POUR COLLAGE SUR PAPIER PEINT INGRAIN

(30) Priorität: 15.10.2015 DE 102015220072
(43) Veröffentlichungstag der Anmeldung: 22.08.2018
(73) Patentinhaber: tesa SE, 22848 Norderstedt (DE)
(72) Erfinder: DOLLASE, Thilo, 22397 Hamburg (DE); GARBERS, Julia, 22159 Hamburg (DE); ALTENWEGNER, Tanja, 20357 Hamburg (DE)
(74) Vertreter: tesa SE
(86) Internationale Anmeldenummer: PCT/EP2016/074551
(87) Internationale Veröffentlichungsnummer: WO 2017/064169

(56) Entgegenhaltungen:
- EP-A1- 1 418 215
- EP-A1- 1 988 141
- EP-A1- 2 130 885

## Beschreibung

Die vorliegende Erfindung betrifft Selbstklebeartikel, enthaltend
(i) zumindest ein Trägermaterial, das zumindest eine geschäumte Schicht enthält mit einer ersten Oberfläche A und einer zweiten Oberfläche B, wobei die zumindest eine geschäumte Schicht des Trägermaterials
   - eine Dicke von mindestens 500 µm, vorzugsweise mindestens 850 µm, und höchstens 1800 µm, vorzugsweise höchstens 1500 µm,
   - eine Dichte von mindestens 30 kg/m³, vorzugsweise mindestens 45 kg/m³, und höchstens 120 kg/m³, vorzugsweise höchstens 100 kg/m³,
   - eine Zugfestigkeit in Ablöserichtung von mindestens 500 kPa, vorzugsweise mindestens 700 kPa,
   - eine Zugdehnung in Ablöserichtung von mindestens 300 %, vorzugsweise mindestens 500 %, sowie
   - eine Stauchhärte von mindestens 50 kPa, vorzugsweise mindestens 70 kPa, und höchstens 300 kPa, vorzugsweise höchstens 200 kPa, aufweist
(ii) eine Haftklebemasseschicht HKA, die der Oberfläche A zugeordnet ist,
(iii) eine Haftklebemasseschicht HKB, die der Oberfläche B zugeordnet ist,
(iv) optional eine oder mehrere weitere Schichten,
sowie die Verwendung solcher Selbstklebeartikel.

Durch dehnendes Verstrecken rückstandsfrei von einem Verklebungsuntergrund ablösbare Selbstklebeprodukte sind bekannt. Sie sind z. B. als tesa Powerstrips® oder 3M Command™ kommerziell erhältlich.

Zu den vielfältigen Anwendungen von Klebestreifen mit solchen Klebemassen zählen Verklebungen auf Wänden, und zwar nicht nur auf glatten, ebenen Untergründen, sondern gerade auch auf beliebigen rauen Flächen wie Putz, Holz, Raufasertapete, insbesondere gestrichener Raufasertapete, anderen Strukturtapeten, Paneelen oder Wandtafeln. Auch hier besteht der Wunsch, Gegenstände auch mit hohem Gewicht zu befestigen, ohne den Untergrund (die Wand) zu beschädigen. Bei der Verklebung z.B. auf gestrichener Raufasertapete treten jedoch im Vergleich zu vielen anderen Untergründen vor allem drei besondere Herausforderungen auf: (a) Raufasertapete stellt einen nicht glatten Verklebungsuntergrund dar, (b) die Oberfläche der Raufasertapete ist üblicherweise mit einer Anstreichfarbe versehen, die durch Bindemittel und/oder Additive bedingt eine geringe Oberflächenenergie aufweisen kann, (c) insbesondere Raufasertapete stellt einen relativ leicht spaltbaren Verklebungsuntergrund dar, der beim Wiederablösen nicht beschädigt werden soll. Je nach Art der Anstreichfarbe können die Oberflächeneigenschaften stark variieren. Ein weiterer Aspekt ist der Feuchtegehalt der gestrichenen Raufasertapete, die von der Tages-/Jahreszeit und der geographischen Region abhängt und entsprechend auch temporären Schwankungen unterliegen kann. Für andere der oben angeführten beispielhaften Untergründe gelten alle oder einige dieser Herausforderungen in ähnlicher Weise. Hierfür sind geeignete Klebemassen gesucht. Gesucht sind zudem Klebestreifen mit Klebemassen mit hoher Kleb- und Halteleistung, die sich durch dehnendes Verstrecken rückstandsfrei und möglichst zerstörungsfrei von gestrichenem Putz oder anderen rauen Oberflächen ablösen lassen.

Klebemassen hierfür können vorteilhaft auf Basis von Styrol-Blockcopolymeren und Klebharzen formuliert werden.

Elastisch oder plastisch hochdehnbare Haftklebestreifen, die sich durch dehnendes Verstrecken in der Verklebungsebene rückstands- und zerstörungsfrei wieder ablösen lassen, sind beispielsweise aus US 4,024,312 A, DE 33 31 016 C2, WO 92/01132 A1, WO 92/11333 A1, DE 42 22 849 A1, WO 95/06691 A1, DE 195 31 696 A1, DE 197 08 366 A1, DE 196 49 727 A1, DE 196 49 728 A1, DE 196 49 729 A1, DE 197 08 364 A1, DE 197 20 145 A1, DE 198 20 854 A1 und DE 100 03 318 A1 bekannt und werden nachfolgend auch als stripfähige Haftklebestreifen oder einfach als (Klebe-)strips bezeichnet. Besonders vorteilhaft sind für diese Klebeprodukte Styrol-Blockcopolymer-haltige Formulierungen einsetzbar.

Die Anwendung, Klebestreifen auf Raufasertapete zu verkleben, ist grundsätzlich ebenfalls vorbeschrieben und eine typische Anwendung im privaten Haushalt und in Büros.

DE 10 2004 030 252 A1 beschreibt ein Hakensystem zur Befestigung auf einem rauen Untergrund, das es erlaubt, den Klebestreifen zerstörungsfrei von der empfindlichen Oberfläche abzulösen. Spezielle Ausgestaltungen der Klebemasse des durch dehnendes Verstrecken wiederablösbaren Klebestrips werden nicht gegeben

EP 845 513, EP 845 514 und EP 845 515 beschreiben Anforderungen bei der Verklebung auf rauen Untergründen und führen aus, dass mit den zuvor genannten Selbstklebebändern auf glatten und festen Untergründen im Allgemeinen hohe Verklebungsfestigkeiten erreicht werden können. Auf rauen Untergründen ist die Verklebungsfestigkeit insbesondere für Produkte von geringer Dicke, jedoch auch für Selbstklebebänder höherer Schichtstärke, für zahlreiche Anwendungen ungenügend. Als Ursache für die unzureichende Verklebungsfestigkeit wird eine nicht ausreichende Verklebungsfläche, bedingt durch eine zu niedrige Konformabilität der Klebebänder an raue und unregelmäßige Oberflächen angenommen.

Als Lösung schlägt EP 845 513 A2 die Verwendung spezieller Schaumträger in den Klebeprodukten vor. Dabei handelt es sich um Ethylen-(Co-)polymere, Ethylen-Vinylacetat Copolymere, Polyvinylacetate, Polypropylene, EPDM, thermoplastische Elastomere auf Basis von Styrolblockcopolymeren, Polyurethane auf Basis aromatischer und aliphatischer Diisocyanate, PVC, Polychloroprene, Naturkautschuk oder Acrylatcopolymere. Die Dicken der eingesetzten Schaumstoffe liegen zwischen 175 µm und 30 mm. Raumdichten betragen 20 bis 500 kg/m³. Die Reißdehnung der eingesetzten Schäume ist kleiner als die Reißdehnung der die Reißfestigkeit bestimmenden Haftklebemasse. Als Haftklebemassen finden bevorzugt solche auf Basis von Blockcopolymeren enthaltend Polymerblöcke gebildet von Vinylaromaten, bevorzugt Styrol, und solchen gebildet durch Polymerisation von 1,3-Dienen, bevorzugt Butadien und Isopren Anwendung. In den Beispielen kommen stets Kombinationen mit einem Isopren-haltigen (Blockco-)polymer zum Einsatz. Zwar sind Anwendungen zum zerstörungsfreien Wiederablösen auf Raufasertapete genannt. Daten zur Halteleistung werden jedoch nicht angegeben.

Als Lösung schlägt EP 845 514 A2 die Verwendung weiterer spezieller Schaumträger in den Klebeprodukten vor. Die Schaumträger sind auf besondere Art vorgeschädigt, so dass die Ablösekraft (Stripkraft) reduziert ist. Bei den Grundmaterialien für die Schaumträger handelt es sich um Ethylen-(Co-)polymere, Ethylen-Vinylacetat Copolymere, Polyvinylacetate, Polypropylene, EPDM, thermoplastische Elastomere auf Basis von Styrolblockcopolymeren, Polyurethane auf Basis aromatischer und aliphatischer Diisocyanate, PVC, Polychloroprene, Naturkautschuk oder Acrylatcopolymere. Die Dicken der eingesetzten Schaumstoffe liegen zwischen 175 µm und 30 mm. Raumdichten betragen 20 bis 500 kg/m³. Zur Einstellung der Ablösekräfte werden die Schaumträger gezielt geschädigt z. B. durch Perforieren, Zerschneiden oder Stanzen. Als Haftklebemassen finden bevorzugt solche auf Basis von Blockcopolymeren enthaltend Polymerblöcke gebildet von Vinylaromaten, bevorzugt Styrol, und solchen gebildet durch Polymerisation von 1,3-Dienen, bevorzugt Butadien und Isopren Anwendung. In den Beispielen kommt eine Kombination eines Polystyrol-Polyisopren Blockcopolymers mit einem Polystyrol-Polybutadien Blockcopolymer zum Einsatz.

Als Lösung schlägt EP 845 515 A2 die Verwendung weiterer spezieller Schaumträger in den Klebeprodukten vor. Die Schaumträger weisen einen besonders niedrigen E-Modul auf. Für die Grundmaterialien für die Schaumträger werden Ethylenvinylacetatcopolymere, sowie Gemische von Ethylenvinylacetatcopolymeren und/oder Polyvinylacetaten mit Polyethylenen genannt. Als weitere Polymere sind Polyvinylacetate, EPDM, thermoplastische Elastomere auf Basis von Styrolblockcopolymeren, Polyurethane auf Basis aromatischer und aliphatischer Diisocyanate, PVC, Polychloroprene und Naturkautschuk geeignet. Die Dicken der eingesetzten Schaumstoffe liegen zwischen 150 µm und 600 µm. Raumdichten betragen 40 bis 300 kg/m³. Der E-Modul liegt bei höchstens 16 MPa. Als Haftklebemassen finden bevorzugt solche auf Basis von Blockcopolymeren enthaltend Polymerblöcke gebildet von Vinylaromaten, bevorzugt Styrol, und solchen gebildet durch Polymerisation von 1,3-Dienen, bevorzugt Butadien und Isopren Anwendung. In den Beispielen kommt eine Kombination eines Polystyrol-Polyisopren Blockcopolymers mit einem Polystyrol-Polybutadien Blockcopolymer zum Einsatz.

US 6,231,962 B1 und US 6,403,206 B1 beschreiben ebenfalls doppelseitige Klebestrips mit einem Schaumträger. Als Verklebungsuntergründe für Verklebungsanwendungen werden empfindliche, leicht spaltbare Untergründe wie lackierte Wandplatten angegeben, jedoch keine besonders rauen wie gestrichene Raufasertapete. Als Klebemasse können Styrol-Blockcopolymer-basierende Formulierungen zum Einsatz kommen. In konkreten Beispielformulierungen wird typischerweise Mineralöl als Weichmacher genutzt. Dies ist bei der Anwendung auf Raufasertapete aber nachteilig, da ein Durchfetten des Untergrunds auftreten kann, was nach Entfernung des Klebestreifens optisch erkennbar bleiben kann. Die Schriften lehren Schaumträger mit einer maximalen Dehnung von 50 % bis 1200 %, einer Dichte zwischen 32 kg/m³ und 481 kg/m³ und einer Dicke zwischen 760 µm und 25 mm. Bei dem Schaumträger kann es sich um mehrschichtige Träger handeln. Diese weisen einen Elastizitätsmodul zwischen bevorzugt etwa 7 MPa und etwa 16,5 MPa auf. Der Schaum kann auf Materialien wie Polyethylenen, Polypropylenen, Polybutylenen, PVC, Polyvinylacetaten, EVA, ABS, Polyacrylaten oder Polyurethanen basieren.

EP 1 988 141 A1 schlägt Klebemassen vor, die in Bezug auf die Gesamtharzmenge mindestens 40 % eines Weichharzes enthalten. Genannte Anwendungen umfassen die Verklebung von leichten (Papiere) bis mittelschweren Objekten auf Raufasertapete. Hohe Halteleistungen sind nicht Ziel solcher Formulierungen sondern die Möglichkeit, die Verklebung auch von Raufasertapete durch dehnendes Verstrecken oder Schälen zu lösen. Die Klebeprodukte können einen dehnbaren Zwischenträger enthalten, der auch geschäumt sein kann. Die Schaumträger sind nicht weiter spezifiziert.

US 7,276,272 B2 beschreibt doppelseitig klebende Klebestrips, die auch von empfindlichen Untergründen wie Putz, Farbe oder Tapete wieder abgelöst werden können. Es sind keine Verklebungsuntergründe mit besonders ausgeprägter Rauigkeit angegeben. Spezielle Klebemassen und Schaumträger werden nicht explizit genannt.

US 2008/0135159 A1 offenbart weitere Klebestrips für strukturierte Oberflächen. Sie enthalten Schaumträger mit einer Dicke zwischen etwa 200 µm und etwa 550 µm, einer Dichte von etwa 64 kg/m³ und etwa 240 kg/m³ und einer maximalen Dehnung zwischen 50 % und 1200 %. Die Verklebung auf Raufasertapete mit besonders hoher Rauigkeit wird nicht thematisiert. Stattdessen wird eine Lösung zur Verklebung auf weichmacherhaltigen strukturierten Oberflächen wie "textured vinyl wallpaper" vorgeschlagen.

EP 1418215 A1 offenbart Klebemasse für einen Haftklebfolienstreifen aus mindestens einer Schicht, der sich durch dehnendes Verstrecken im Wesentlichen in der Verklebungsebene rückstands- und zerstörungsfrei wieder ablösen lässt, wobei die Klebmasse mindestens ein Blockcopolymer mit ein oder zwei endständigen Blöcken, bestehend aus Vinylaromaten, und einem Block bestehend aus einem konjugierten Dien, bei dem der Anteil an 1,2-verknüpftem Dien selektiv hydriert ist, enthält.

Es besteht weiterhin der Bedarf nach durch dehnendes Verstrecken wiederablösbaren Selbstklebestrips, die besonders gut für raue Untergründe insbesondere auf gestrichener Raufasertapete geeignet sind, indem sie eine hohe Halteleistung bieten und ein Wiederablösen ohne den Untergrund zu zerstören erlauben.

Gesucht sind daher verbesserte Selbstklebeprodukte für die Verklebung auf spaltbaren und/oder rauen gestrichenen Untergründen mit hoher Verklebungs- und Halteleistung, die durch dehnendes Verstrecken rückstandsfrei wiederablösbar sind, ohne den Untergrund zu schädigen.

Die Aufgabe wird gelöst durch Selbstklebeartikel der eingangs genannten Art, bei dem die Haftklebemasseschichten HKA und HKB ausgewählt sind aus einer Gruppe von Haftklebemasseschichtkombinationen, bestehend aus Haftklebemasseschichtkombination 1 und Haftklebemasseschichtkombination 2,
wobei bei Haftklebemasseschichtkombination 1 Haftklebemasseschicht HKA eine Haftklebemasseschicht HKA1 ist, die
(a) zumindest eine Elastomerkomponente vom Typ eines Polybutadien-Polyvinylaromaten-Blockcopolymers mit einem Anteil in Bezug auf die Gesamtklebemasse von 42 Gew.-% bis 55 Gew.-% und einem Diblockanteil in Bezug auf den Gesamtblockcopolymergehalt von 32 Gew.-% bis 55 Gew.-%, vorzugsweise bis 50 Gew.-%,
(b) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
(c) optional zumindest ein Weichharz mit einem Anteil von 0 Gew.-% bis 15 Gew.-%, bezogen auf die Gesamtklebemasse,
(d) optional weitere Additive
   enthält und wobei bei Haftklebemasseschichtkombination 1 Haftklebemasseschicht HKB eine Haftklebemasseschicht HKB1 ist, die
   eine Zugfestigkeit von mindestens 9 MPa, bevorzugt von mindestens 11 MPa aufweist, und
   wobei bei Haftklebemasseschichtkombination 2 Haftklebemasseschicht HKA eine Haftklebemasseschicht HKA2 und Haftklebemasseschicht HKB eine Haftklebemasseschicht HKB2 sind, die jeweils, aber unabhängig voneinander
(e) zumindest eine Elastomerkomponente vom Typ eines Polybutadien-Polyvinylaromaten-Blockcopolymers mit einem Anteil in Bezug auf die Gesamtklebemasse von 38 Gew.-% bis 48 Gew.-% und einem Diblockanteil in Bezug auf den Gesamtblockcopolymergehalt von 10 Gew.-% bis 30 Gew.-%,
(f) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
(g) zumindest ein Weichharz mit einem Anteil von 2 Gew.-% bis 15 Gew.-%, bezogen auf die Gesamtklebemasse,
(h) optional weitere Additive
enthalten.

"Bestehen aus" bzw. "bestehend aus" im Sinne der vorliegenden Erfindung bedeutet dabei, dass eine Formulierung oder Klebemasse nur die angeführten Verbindungen enthält und darüber hinaus keine weiteren Inhaltsstoffe vorhanden sind.

Die Formulierung, dass die Haftklebemasseschicht HKA der Oberfläche A bzw. die Haftklebemasseschicht HKB der Oberfläche B zugeordnet ist, bedeutet, dass HKA auf der Oberfläche A aufgebracht ist bzw. dass HKB auf der Oberfläche B aufgebracht ist, wobei die Haftklebemasseschicht vorzugsweise direkt auf der jeweiligen Oberfläche angebracht ist, es allerdings auch denkbar ist, dass sich zwischen Oberfläche und Haftklebemasseschicht noch weitere Schichten befinden.

Ein erster Gegenstand der Erfindung betrifft einen Selbstklebeartikel, enthaltend
(i) zumindest ein Trägermaterial, das zumindest eine geschäumte Schicht enthält mit einer ersten Oberfläche A und einer zweiten Oberfläche B,
   wobei die zumindest eine geschäumte Schicht des Trägermaterials
   - eine Dicke von mindestens 500 µm, vorzugsweise mindestens 850 µm, und höchstens 1800 µm, vorzugsweise höchstens 1500 µm,
   - eine Dichte von mindestens 30 kg/m³, vorzugsweise mindestens 45 kg/m³, und höchstens 120 kg/m³, vorzugsweise höchstens 100 kg/m³,
   - eine Zugfestigkeit in Ablöserichtung von mindestens 500 kPa, vorzugsweise mindestens 700 kPa,
   - eine Zugdehnung in Ablöserichtung von mindestens 300 %, vorzugsweise mindestens 500 %, sowie
   - eine Stauchhärte von mindestens 50 kPa, vorzugsweise mindestens 70 kPa, und höchstens 300 kPa, vorzugsweise höchstens 200 kPa, aufweist,
(ii) eine Haftklebemasseschicht HKA, die der Oberfläche A zugeordnet ist,
(iii) eine Haftklebemasseschicht HKB, die der Oberfläche B zugeordnet ist,
(iv) optional eine oder mehrere weitere Schichten,
   wobei der Selbstklebeartikel dadurch gekennzeichnet ist, dass die Haftklebemasseschichten HKA und HKB eine Haftklebemasseschichtkombination 1 bilden,
   wobei bei Haftklebemasseschichtkombination 1 Haftklebemasseschicht HKA eine Haftklebemasseschicht HKA1 ist, die
      i. zumindest eine Elastomerkomponente vom Typ eines Polybutadien-Polyvinylaromaten-Blockcopolymers mit einem Anteil in Bezug auf die Gesamtklebemasse von 42 Gew.-% bis 55 Gew.-% und einem Diblockanteil in Bezug auf den Gesamtblockcopolymergehalt von 32 Gew.-% bis 55 Gew.-%, vorzugs-weise bis 50 Gew.-%,
      ii. zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
      iii. optional zumindest ein Weichharz mit einem Anteil von 0 Gew.-% bis 15 Gew.-%, bezogen auf die Gesamtklebemasse,
      iv. optional weitere Additive
   enthält und wobei Haftklebemasseschicht HKB eine Haftklebemasseschicht HKB1 ist, die eine Zugfestigkeit von mindestens 9 MPa, bevorzugt von mindestens 11 MPa aufweist.

Ein zweiter Gegenstand der Erfindung betrifft einen Selbstklebeartikel, enthaltend
(i) zumindest ein Trägermaterial, das zumindest eine geschäumte Schicht enthält mit einer ersten Oberfläche A und einer zweiten Oberfläche B,
   wobei die zumindest eine geschäumte Schicht des Trägermaterials
   - eine Dicke von mindestens 500 µm, vorzugsweise mindestens 850 µm, und höchstens 1800 µm, vorzugsweise höchstens 1500 µm,
   - eine Dichte von mindestens 30 kg/m³, vorzugsweise mindestens 45 kg/m³, und höchstens 120 kg/m³, vorzugsweise höchstens 100 kg/m³,
   - eine Zugfestigkeit in Ablöserichtung von mindestens 500 kPa, vorzugsweise mindestens 700 kPa,
   - eine Zugdehnung in Ablöserichtung von mindestens 300 %, vorzugsweise mindestens 500 %, sowie
   - eine Stauchhärte von mindestens 50 kPa, vorzugsweise mindestens 70 kPa, und höchstens 300 kPa, vorzugsweise höchstens 200 kPa, aufweist,
(ii) eine Haftklebemasseschicht HKA, die der Oberfläche A zugeordnet ist,
(iii) eine Haftklebemasseschicht HKB, die der Oberfläche B zugeordnet ist,
(iv) optional eine oder mehrere weitere Schichten,
   wobei der Selbstklebeartikel dadurch gekennzeichnet ist, dass die Haftklebemasseschichten HKA und HKB eine Haftklebemasseschichtkombination 2 bilden,
   wobei bei Haftklebemasseschichtkombination 2 Haftklebemasseschicht HKA eine Haftklebemasseschicht HKA2 und Haftklebemasseschicht HKB eine Haftklebemasseschicht HKB2 sind, die jeweils, aber unabhängig voneinander
v. zumindest eine Elastomerkomponente vom Typ eines Butadien-Blockcopolymers mit einem Anteil in Bezug auf die Gesamtklebemasse von 38 Gew.-% bis 48 Gew.-% und einem Diblockanteil in Bezug auf den Gesamtblockcopolymergehalt von 10 Gew.-% bis 30 Gew.-%,
vi. zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
vii. zumindest ein Weichharz mit einem Anteil von 2 Gew.-% bis 15 Gew.-%, bezogen auf die Gesamtklebemasse,
viii. optional weitere Additive
enthalten.

### Haftklebemasse HKA1

Haftklebemasse HKA1 kommt bei der Verklebung in Kontakt mit der rauen Oberfläche (insbesondere Raufasertapete). Sie ist besonders gut geeignet, Rauigkeiten des Verklebungsuntergrunds auszugleichen.

### (a) Elastomer (Blockcopolymer)

Als Elastomerkomponente (Blockcopolymerkomponente) kommt, vorzugsweise zu mindestens 90 Gew.-% (bezogen auf den Gesamtblockcopolymergehalt), ein Polybutadien-Polyaromaten-Blockcopolymer oder ein Gemisch aus verschiedenen Polybutadien-Polyvinylaromaten-Blockcopolymeren zum Einsatz. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie z. B. Ozon im Vergleich zu Polyisopren-Blockcopolymeren (SIS) bevorzugt. SIS-haltige Formulierungen sind üblicherweise nicht 1:1 auf SBS-haltige und SIS-freie Formulierungen übertragbar, wenn ein vergleichbares mechanisches Eigenschaftsprofil erreicht werden soll. Will man auf SIS in der Formulierung verzichten und stattdessen mit SBS arbeiten, dann müssen die SBS-haltigen Formulierungen speziell angepasst werden, um das vorgegebene Eigenschaftsprofil zu erfüllen. Zumindest zum Teil lassen sich diese Unterschiede in der Weichheit von SIS und SBS (indiziert durch die Shore A Härte) erklären. Die Shore A Härte ist typischerweise für SIS geringer als für SBS Systeme.

Das Elastomergemisch enthält zumindest ein Polybutadien-Polyvinylaromaten-Blockcopolymer bestehend aus einem A-Block und einem B-Block, dem sogenannten Diblockcopolymer. Diblockcopolymere tragen zu Tack und Auffließvermögen der Klebemasse bei. Das Elastomergemisch enthält zudem ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt bei mindestens 42 Gew.-% und bei höchstens 55 Gew.-%. Deutlich geringere Anteile an Elastomer führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich höhere Anteile an Elastomer führen zu einem Abfall an Verklebungsfestigkeit insbesondere auf unpolaren Untergründen wie zum Beispiel unpolarer Anstreichfarbe. Der Anteil an Diblockcopolymeren bezogen auf den Gesamtblockcopolymergehalt in der Klebemasseformulierung liegt bei mindestens 32 Gew.-% und bei höchstens 55 Gew.-%, bevorzugt bei höchstens 50 Gew.-%. Deutlich höhere Diblockanteile führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich geringere Diblockanteile führen zu einem Abfall an Verklebungsfestigkeit insbesondere auf unpolaren Untergründen wie zum Beispiel unpolarer Anstreichfarbe. Entsprechend beträgt der Anteil an Tri- oder höherem Multiblockcopolymer von 45 Gew.-% bis 68 Gew.-%, vorzugsweise 50 Gew.-% bis 68 Gew.-% in Bezug auf den Gesamtblockcopolymergehalt. Unter den Tri- oder höheren Multiblockcopolymeren sind die Triblockcopolymere besonders bevorzugt.

Die gewichtsmittlere Molmasse (gemessen nach Test I) der Blockcopolymere liegt zwischen 50 000 g/mol und 500 000 g/mol, bevorzugt zwischen 75 000 g/mol und 200 000 g/mol. Der Anteil an Vinylaromatenblock in den Blockcopolymeren kann von Blockcopolymersorte zu Blockcopolymersorte in der Formulierung unterschiedlich sein, liegt aber typischerweise bei mindestens 20 Gew.-%, bevorzugt bei mindestens 25 Gew.-% und höchstens bei 40 Gew.-%, bevorzugt höchstens bei 35 Gew.-%. Ein zu geringer Polyvinylaromatenanteil führt zu unzureichender physikalischer Vernetzung, die in den Polybutadien-Polyvinylaromaten-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C8- bis C12-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test II bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke höchstens -50 °C insbesondere höchstens -80 °C) wider. Diese Angaben beziehen sich auf die reinen, unabgemischten Blockcopolymere.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 85 % bezogen auf die Polybutadienblöcke und ein 1,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den PolybutadienBlöcken führt zu vorteilhafter Zug/Dehnungs-Charakteristik, so dass eine ausreichende Dehnbarkeit resultiert, die insbesondere für das unter Verstreckung rückstandsfreie Wiederablösen wichtig ist. Die 1,2-vinyl-Einheiten können hydriert sein. Die 1,4-Einheiten sind vorteilhafterweise im Wesentlichen nicht hydriert.

### (b) Klebharz

Klebharze sind spezielle Verbindungen mit im Vergleich zu den Elastomeren niedriger Molmasse typischerweise mit einem Molekulargewicht (Test I) Mw < 5 000 g/mol. Typischerweise beträgt das Molekulargewicht Mw von 500 bis 5 000 g/mol, bevorzugt von 500 bis 2 000 g/mol. Das zumindest eine Klebharz weist einen DACP-Wert (nach Test III) von mindestens etwa +5 °C und höchstens etwa +50°C, bevorzugt von höchstens etwa +45 °C, sowie einem MMAP-Wert (nach Test IV) von mindestens etwa +50 °C und höchstens etwa +85 °C, bevorzugt von höchstens etwa +80 °C auf. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten. Das Klebharz weist eine Harzerweichungstemperatur (nach Test V) von mindestens etwa 90 °C, bevorzugt von mindestens etwa 110 °C, und höchstens +140 °C, bevorzugt von höchstens +120 °C auf. Bei dem verwendeten zumindest einen Klebharz handelt es sich vorteilhaft um ein Kohlenwasserstoffharz.

Zu hohe Polarität (zu geringe DACP-Werte) führt zu beginnender Verträglichkeit mit den Vinylaromatenblöcken, was zu Reduktion der Kohäsion und damit der Zugfestigkeit führen kann. Zu geringe Polarität (zu hohe DACP-Werte) führt zu Inkompatibilität des Klebharzes mit dem Weichblock und damit zu einem Verlust von Haftklebrigkeit.

Zu hohe Aromatizität (zu geringe MMAP-Werte) führt zu beginnender Verträglichkeit mit den Vinylaromatenblöcken, was zu Reduktion der Kohäsion und damit der Zugfestigkeit führen kann. Zu geringe Aromatizität (zu hohe MMAP-Werte) führt zu Inkompatibilität des Klebharzes mit dem Weichblock und damit zu einem Verlust von Haftklebrigkeit.

Die Harze werden bevorzugt aus den Harzklassen der (teil)hydrierten aromatisch modifizierten C5-Harze, der Polyterpen-Harze (hergestellt aus α-Pinen, β-Pinen, δ-Limonen oder Gemischen dieser Ausgangsstoffe), der teilhydrierten C9-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Sehr bevorzugt werden Polyterpene-Harze.

### (c) Optionale Weichharze

Das optional einsetzbare Weichharz dient zur finalen Feineinstellung der Kohäsions-/ Adhäsions-Balance. Es handelt sich dabei sehr bevorzugt um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test VI bestimmt. Bei dem Weichharz kann es sich um ein Kolophonium basierendes oder sehr bevorzugt um ein Kohlenwasserstoff basierendes Weichharz handeln. Das Weichharz oder das Weichharzgemisch kommt in Bezug auf die Gesamtklebmasseformulierung mit einem Anteil von 0 Gew.-% bis 15 Gew.-%, bevorzugt von mindestens 5 Gew.-% und höchstens 12 Gew.-% bezogen auf die Gesamtklebemassezusammensetzung zum Einsatz. Ein zu hoher Anteil an Weichharz führt zu einer Verringerung der Kohäsion, was sich in der Halteleistung und in der Zugfestigkeit zeigt.

Übliche niederviskose Weichmacher wie Mineralöle sind im Sinne dieser Erfindung unvorteilhaft. Ihr Anteil in der Gesamtrezeptur liegt vorzugsweise bei höchstens 1 Gew.-%, sehr bevorzugt wird auf solche Weichmacher vollständig verzichtet. Nachteilig an Weichmachern geringer Viskosität ist die Gefahr, dass saugfähige Verklebungsuntergründe wie Rauhfasertapete durchfettet werden können. Nach Wiederablösen des Klebestreifens bleibt ein unerwünschter optischer Eindruck an der Verklebungsstelle zurück.

### (d) Optionale weitere Additive

Der Klebemasse können als weitere Additive vor allem Schutzmittel zugesetzt werden. Hier seien Alterungsschutzmittel primärer und sekundärer Art, Licht- und UV-Schutzmittel sowie Flammschutzmittel genannt und auch Füllstoffe, Farbstoffe und Pigmente. Die Klebemasse kann so beliebig gefärbt oder weiß, grau oder schwarz sein.

Typische Einsatzmengen für ein Additiv liegen bei bis zu 1 Gew.-% bezogen auf die Gesamtklebemassezusammensetzung. Besonders vorteilhaft sind Alterungsschutzmittel, die keine farbigen Rückstände auf Verklebungsuntergründen zurücklassen (siehe hierzu den Stand der Technik der EP 1 341 862 B1).

Füllstoffe können höher dosiert werden, und zwar typischerweise zu einem Anteil von bis 5 Gew.-% bezogen auf die Gesamtklebemassezusammensetzung.

Als Additive können typischerweise genutzt werden:
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe und/oder Pigmente (wie z. B. Ruß)
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Die Auswahl von Additiven beschränkt sich vorzugsweise auf die oben genannten.

### Haftklebemasse HKB1

Haftklebemasse HKB1 bringt über ihre mechanischen Eigenschaften Zugfestigkeit in das Gesamtprodukt ein. Sie weist eine Zugfestigkeit als Einzelschicht von mindestens 9 MPa, bevorzugt von mindestens 11 MPa auf. Diese Klebemasse bringt in Mehrschichtaufbauten, die eine Klebeschicht der Sorte HKA1 enthalten, Zugfestigkeit ein. HKB1 kommt bei einer Verklebung zweier Substrate mit dem zweiten Substrat in Kontakt, das sich üblicherweise nicht durch eine besonders ausgeprägte Rauigkeit / Spaltbarkeit auszeichnet. Bei diesem zweiten Substrat kann es sich insbesondere um eine Befestigungsplatte eines Hakenkörpers handeln.

### (a) Elastomer (Blockcopolymer)

Vorzugsweise kommt als Elastomerkomponente (Blockcopolymerkomponente), besonders bevorzugt zu mindestens 90 Gew.-% (bezogen auf den Gesamtblockcopolymergehalt), ein Polybutadien-Polyvinylaromaten-Blockcopolymer oder ein Gemisch aus verschiedenen Polybutadien-Polyvinylaromaten-Blockcopolymeren zum Einsatz. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie z. B. Ozon im Vergleich zu Polyisopren-Blockcopolymeren (SIS) bevorzugt.

Das Elastomergemisch enthält vorzugsweise zumindest ein Polybutadien-Polyvinylaromaten-Blockcopolymer bestehend aus einem A-Block und einem B-Block, dem sogenannten Diblockcopolymer. Diblockcopolymere tragen zu Tack und Auffließvermögen der Klebemasse bei. Das Elastomergemisch enthält bevorzugt zudem ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt insbesondere bei mindestens 40 Gew.-% und bei höchstens 60 Gew.-%. Deutlich geringere Anteile an Elastomer führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich höhere Anteile an Elastomer führen zu einem Abfall an Verklebungsfestigkeit. Der Anteil an Diblockcopolymeren bezogen auf den Gesamtblockcopolymergehalt in der Klebemasseformulierung liegt vorteilhaft zwischen mindestens 10 Gew.-% und höchstens 30 Gew.-%. Deutlich höhere Diblockanteile führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich geringere Diblockanteile führen zu einem Abfall an Verklebungsfestigkeit. Entsprechend beträgt der Anteil an Tri- oder höherem Multiblockcopolymer in dieser vorteilhaften Ausführung von 40 Gew.-% bis 60 Gew.-%in Bezug auf den Gesamtblockcopolymergehalt. Unter den Tri- oder höheren Multiblockcopolymeren sind die Triblockcopolymere besonders bevorzugt.

Die gewichtsmittlere Molmasse (gemessen nach Test I) der Blockcopolymere liegt zwischen 50 000 g/mol und 500 000 g/mol, bevorzugt zwischen 75 000 g/mol und 200 000 g/mol. Der Anteil an Vinylaromatenblock in den Blockcopolymeren kann von Blockcopolymersorte zu Blockcopolymersorte in der Formulierung unterschiedlich sein, liegt aber typischerweise bei mindestens 20 Gew.-%, bevorzugt bei mindestens 25 Gew.-% und höchstens bei 40 Gew.-%, bevorzugt höchstens bei 35 Gew.-%. Ein zu geringer Polyvinylaromatenanteil führt zu unzureichender physikalischer Vernetzung, die in den Polybutadien-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C8- bis C12-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test II bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 C, insbesondere mindestens 60 °C und für B-Blöcke höchstens -50 °C insbesondere höchstens -80 °C) wider. Diese Angaben beziehen sich auf die reinen, unabgemischten Blockcopolymere.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 85 % bezogen auf die Polybutadienblöcke und ein 1,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den PolybutadienBlöcken führt zu vorteilhafter Zug/Dehnungs-Charakteristik, so dass eine ausreichende Dehnbarkeit resultiert, die insbesondere für das unter Verstreckung rückstandsfreie Wiederablösen wichtig ist. Die 1,2-vinyl-Einheiten können hydriert sein. Die 1,4-Einheiten sind vorteilhafterweise im Wesentlichen nicht hydriert.

### (b) Klebharz

Die Klebemasse HKB1 enthält des Weiteren ein Klebharz. Auch hier handelt es sich bei den Klebharzen um spezielle Verbindungen mit im Vergleich zu den Elastomeren niedriger Molmasse mit einem typischen Molekulargewicht (Test I) Mw < 5 000 g/mol. Typischerweise beträgt das Molekulargewicht Mw von 500 bis 5 000 g/mol, bevorzugt von 500 bis 2 000 g/mol. Das zumindest eine Klebharz weist einen DACP-Wert (nach Test III) von mindestens etwa +5 °C und höchstens etwa +50°C, bevorzugt von höchstens etwa +45 °C, sowie einem MMAP-Wert (nach Test IV) von mindestens etwa +50 °C und höchstens etwa +85 °C, bevorzugt von höchstens etwa +80 °C auf. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten. Das Klebharz weist eine Harzerweichungstemperatur (nach Test V) von mindestens etwa 90 °C, bevorzugt von mindestens etwa 110 °C, und höchstens +140 °C, bevorzugt von höchstens +120 °C auf. Bei dem verwendeten zumindest einen Klebharz handelt es sich vorteilhaft um ein Kohlenwasserstoffharz.

Zu hohe Polarität (zu geringe DACP-Werte) führt zu beginnender Verträglichkeit mit den Vinylaromatenblöcken, was zu Reduktion der Kohäsion und damit der Zugfestigkeit führen kann. Zu geringe Polarität (zu hohe DACP-Werte) führt zu Inkompatibilität des Klebharzes mit dem Weichblock und damit zu einem Verlust von Haftklebrigkeit.

Zu hohe Aromatizität (zu geringe MMAP-Werte) führt zu beginnender Verträglichkeit mit den Vinylaromatenblöcken, was zu Reduktion der Kohäsion und damit der Zugfestigkeit führen kann. Zu geringe Aromatizität (zu hohe MMAP-Werte) führt zu Inkompatibilität des Klebharzes mit dem Weichblock und damit zu einem Verlust von Haftklebrigkeit.

Die Harze werden bevorzugt aus den Harzklassen der (teil)hydrierten aromatisch modifizierten C5-Harze, der Polyterpen-Harze (hergestellt aus α-Pinen, β-Pinen, δ-Limonen oder Gemischen dieser Ausgangsstoffe), der teilhydrierten C9-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Sehr bevorzugt werden Polyterpene-Harze.

### (c) Optional einsetzbare Weichharze

Optional ist ein Weichharz einsetzbar und dient zur finalen Feineinstellung der Kohäsions-/Adhäsions-Balance. Es handelt sich dabei sehr bevorzugt um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test VI bestimmt. Bei dem Weichharz kann es sich um ein Kolophonium basierendes oder sehr bevorzugt um ein Kohlenwasserstoff basierendes Weichharz handeln. Das Weichharz oder das Weichharzgemisch kommt in Bezug auf die Gesamtklebmasseformulierung mit einem Anteil von höchstens 12 Gew.-%, bevorzugt von höchstens 5 % bezogen auf die Gesamtklebemassezusammensetzung zum Einsatz. Ein zu hoher Anteil an Weichharz führt zu einer Verringerung der Kohäsion, was sich in der Halteleistung und in der Zugfestigkeit zeigt.

In HKB1 sind aber auch niederviskose Weichmacher wie Mineralöle als Bestandteil der Haftklebemasseschicht HKB1 im Sinne dieser Erfindung denkbar. Ihr Anteil in der Gesamtrezeptur liegt vorzugsweise bei höchstens 5 Gew.-%, bevorzugt bei höchstens 3 Gew.-%. Es kann auch auf solche Weichmacher vollständig verzichtet werden. Nachteilig an Weichmachern geringer Viskosität ist die Gefahr, dass Migration in ein in Kontakt mit der Klebeschicht HKB1 befindliche Schicht wie z. B. eine (Schaum-)trägerschicht stattfinden kann.

### (d) Optionale weitere Additive

Der Klebemasse HKB1 können ebenfalls als weitere Additive vor allem Schutzmittel zugesetzt werden. Hier seien Alterungsschutzmittel primärer und sekundärer Art, Licht- und UV-Schutzmittel sowie Flammschutzmittel genannt und auch Füllstoffe, Farbstoffe und Pigmente. Die Klebemasse kann so beliebig gefärbt oder weiß, grau oder schwarz sein.

Typische Einsatzmengen für ein Additiv liegen bei bis zu 1 Gew.-% bezogen auf die Gesamtklebemassezusammensetzung. Füllstoffe können höher dosiert werden, und zwar typischerweise zu einem Anteil von bis 5 Gew.-% bezogen auf die Gesamtklebemassezusammensetzung.

Als Additive können typischerweise genutzt werden:
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe und/oder Pigmente (wie z. B. Ruß)
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Die Auswahl von Additiven beschränkt sich vorzugsweise auf die oben genannten. Haftklebemasse HKA2 und HKB2

Alternativ zu HKA1 kann zur Verklebung auf rauen / spaltbaren Untergründen auch vorteilhaft HKA2 verwendet werden. In diesem Fall kann als zweite Klebeschicht vorteilhaft HKB2 eingesetzt werden. HKA2 bietet eine gute Balance aus Reißfestigkeit einerseits und Anpassungsfähigkeit an einen rauen Untergrund andererseits. Die Nutzung von HKA2 erlaubt dann, sofern HKA2 und HKB2 von der Zusammensetzung her gleich gewählt werden, einen symmetrischen Produktaufbau.

### (a) Elastomer (Blockcopolymer)

Als Elastomerkomponente (Blockcopolymerkomponente) kommt jeweils, aber unabhängig voneinander, vorzugsweise zu mindestens 90 Gew.-% (bezogen auf den Gesamtblockcopolymergehalt), ein Polybutadien-Polyvinylaromaten-Blockcopolymer oder ein Gemisch aus verschiedenen Polybutadien-Polyvinylaromaten-Blockcopolymeren zum Einsatz. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie z. B. Ozon im Vergleich zu Polyisopren-Blockcopolymeren (SIS) bevorzugt.

Das Elastomergemisch enthält zumindest ein Polybutadien-Polyvinylaromaten-Blockcopolymer bestehend aus einem A-Block und einem B-Block, dem sogenannten Diblockcopolymer. Diblockcopolymere tragen zu Tack und Auffließvermögen der Klebemasse bei. Das Elastomergemisch enthält zudem ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt bei mindestens 38 Gew.-% und bei höchstens 48 Gew.-%. Deutlich geringere Anteile an Elastomer führen zu nicht ausreichender Kohäsion, was sich in reduzierter Halteleistung und/ oder reduzierter Reißfestigkeit beim unter dehnendem Verstrecken durchgeführten Ablöseprozess äußert. Deutlich höhere Anteile an Elastomer führen zu einem Abfall an Verklebungsfestigkeit insbesondere auf unpolaren Untergründen wie zum Beispiel unpolarer Anstreichfarbe. Der Anteil an Diblockcopolymeren bezogen auf den Gesamtblockcopolymergehalt in der Klebemasseformulierung liegt bei mindestens 10 Gew.-% und bei höchstens 30 Gew.-%. Deutlich höhere Diblockanteile führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich geringere Diblockanteile führen zu einem Abfall an Verklebungsfestigkeit insbesondere auf unpolaren Untergründen wie zum Beispiel unpolarer Anstreichfarbe. Entsprechend beträgt der Anteil an Tri- oder höherem Multiblockcopolymer von 70 Gew.-% bis 90 Gew.-% in Bezug auf den Gesamtblockcopolymergehalt. Unter den Tri- oder höheren Multiblockcopolymeren sind die Triblockcopolymere besonders bevorzugt.

Die gewichtsmittlere Molmasse (gemessen nach Test I) der Blockcopolymere liegt zwischen 50 000 g/mol und 500 000 g/mol, bevorzugt zwischen 75 000 g/mol und 200 000 g/mol. Der Anteil an Vinylaromatenblock in den Blockcopolymeren kann von Blockcopolymersorte zu Blockcopolymersorte in der Formulierung unterschiedlich sein, liegt aber typischerweise bei mindestens 20 Gew.-%, bevorzugt bei mindestens 25 Gew.-% und höchstens bei 40 Gew.-%, bevorzugt höchstens bei 35 Gew.-%. Ein zu geringer Polyvinylaromatenanteil führt zu unzureichender physikalischer Vernetzung, die in den Polybutadien-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C8- bis C12-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test II bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke höchstens -50 °C insbesondere höchstens -80 °C) wider. Diese Angaben beziehen sich auf die reinen, unabgemischten Blockcopolymere.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 85 % bezogen auf die Polybutadienblöcke und ein 1,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den PolybutadienBlöcken führt zu vorteilhafter Zug/Dehnungs-Charakteristik, so dass eine ausreichende Dehnbarkeit resultiert, die insbesondere für das unter Verstreckung rückstandsfreie Wiederablösen wichtig ist. Die 1,2-vinyl-Einheiten können hydriert sein. Die 1,4-Einheiten sind vorteilhafterweise im Wesentlichen nicht hydriert.

### (b) Klebharz

Bei dem verwendeten zumindest einen Klebharz handelt es sich jeweils, aber für HKA2 und HKB2 unabhängig voneinander, um ein Kohlenwasserstoffharz mit einem DACP-Wert (nach Test III) von mindestens etwa +5 °C und höchstens etwa +50 °C, bevorzugt von höchstens etwa +45 °C sowie einem MMAP-Wert (nach Test IV) von mindestens etwa +50 °C und höchstens etwa +85 °C, bevorzugt von höchstens etwa +80 °C. Das Klebharz weist eine Harzerweichungstemperatur (nach Test V) von mindestens etwa 90 °C und höchstens +140 °C, bevorzugt von mindestens etwa 110 °C und höchstens +120 °C auf. Klebharze sind spezielle Verbindungen mit im Vergleich zu den Elastomeren niedriger Molmasse mit einem typischen Molekulargewicht (Test I) Mw < 5 000 g/mol. Typischerweise beträgt das Molekulargewicht Mw von 500 bis 5 000 g/mol, bevorzugt von 500 bis 2 000 g/mol. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten.

Zu hohe Polarität (zu geringe DACP-Werte) führt zu beginnender Verträglichkeit mit den Vinylaromatenblöcken, was zu Reduktion der Kohäsion und damit der Zugfestigkeit führen kann. Zu geringe Polarität (zu hohe DACP-Werte) führt zu Inkompatibilität des Klebharzes mit dem Weichblock und damit zu einem Verlust von Haftklebrigkeit.

Zu hohe Aromatizität (zu geringe MMAP-Werte) führt zu beginnender Verträglichkeit mit den Vinylaromatenblöcken, was zu Reduktion der Kohäsion und damit der Zugfestigkeit führen kann. Zu geringe Aromatizität (zu hohe MMAP-Werte) führt zu Inkompatibilität des Klebharzes mit dem Weichblock und damit zu einem Verlust von Haftklebrigkeit.

Die Harze werden bevorzugt aus den Harzklassen der (teil)hydrierten aromatisch modifizierten C5-Harze, der Polyterpen-Harze (hergestellt aus α-Pinen, β-Pinen, δ-Limonen oder Gemischen dieser Ausgangsstoffe), der teilhydrierten C9-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Sehr bevorzugt werden Polyterpene-Harze.

### (c) Weichharze

Das Weichharz dient zur finalen Feineinstellung der Kohäsions-/Adhäsions-Balance. Es handelt sich dabei jeweils, aber für HKA2 und HKB2 unabhängig voneinander sehr bevorzugt um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test VI bestimmt. Bei dem jeweiligen Weichharz kann es sich um ein Kolophonium basierendes oder sehr bevorzugt um ein Kohlenwasserstoff basierendes Weichharz handeln. Das Weichharz oder das Weichharzgemisch kommt in Bezug auf die Gesamtklebmasseformulierung jeweils, aber unabhängig voneinander, mit einem Anteil von 2 Gew.-%, bevorzugt von mindestens 5 Gew.-% und höchstens 15 Gew.-%, bevorzugt höchstens 12 Gew.-% bezogen auf die Gesamtklebemassezusammensetzung zum Einsatz. Ein zu hoher Anteil an Weichharz führt zu einer Verringerung der Kohäsion, was sich in der Halteleistung und in der Zugfestigkeit zeigt.

Übliche niederviskose Weichmacher wie Mineralöle sind im Sinne dieser Erfindung unvorteilhaft. Ihr Anteil in der Gesamtrezeptur liegt insbesondere für HKA2 vorzugsweise bei höchstens 1 Gew.-%, sehr bevorzugt wird auf solche Weichmacher vollständig verzichtet. Nachteilig an Weichmachern geringer Viskosität ist die Gefahr, dass saugfähige Verklebungsuntergründe wie Raufasertapete durchfettet werden können. Nach Wiederablösen des Klebestreifens bleibt ein unerwünschter optischer Eindruck an der Verklebungsstelle zurück. Für HKB2 können höhere Anteile (z. B. bis zu 5 Gew.-%) eingesetzt werden.

### Optionale weitere Additive

Der jeweiligen Klebemasse können jeweils, aber unabhängig voneinander als weitere Additive vor allem Schutzmittel zugesetzt werden. Hier seien Alterungsschutzmittel primärer und sekundärer Art, Licht- und UV-Schutzmittel sowie Flammschutzmittel genannt und auch Füllstoffe, Farbstoffe und Pigmente. Die Klebemasse kann so beliebig gefärbt oder weiß, grau oder schwarz sein.

Typische Einsatzmengen für ein Additiv liegen bei bis zu 1 Gew.-% bezogen auf die Gesamtklebemassezusammensetzung. Besonders vorteilhaft sind Alterungsschutzmittel, die keine farbigen Rückstände auf Verklebungsuntergründen zurücklassen.

Füllstoffe können höher dosiert werden, und zwar typischerweise zu einem Anteil von bis 5 Gew.-% bezogen auf die Gesamtklebemassezusammensetzung.

Als Additive können typischerweise genutzt werden:
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe und/oder Pigmente (wie z. B. Ruß)
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Die Auswahl von Additiven beschränkt sich vorzugsweise auf die oben genannten.

Schichtdicken der Haftklebemasseschichten HKA und HKB können unabhängig voneinander bei mindestens 20 µm und bevorzugt höchstens 250 µm, bevorzugt bei mindestens 50 µm und sehr bevorzugt bei höchstens 150 µm liegen. Die Schichtdicke der Haftklebemasseschicht HKA und der Haftklebemasseschicht HKB kann gleich oder verschieden sein, wobei Haftklebemasseschicht HKA dicker sein kann oder dünner als Haftklebemasseschicht HKB.

### Schaumträger

Zumindest eine Schicht des Trägermaterials ist geschäumt. Die Schaumschicht wird zur Lösung der Aufgabe speziell ausgewählt. Dabei gilt es, eine ausreichende Balance zu schaffen aus Anpassungsfähigkeit und Halteleistung. Anpassungsfähigkeit ist für die Klebeprodukte wichtig, um eine optimale Kontaktfläche zwischen Klebeschicht und rauem Untergrund (insbesondere Raufasertapete) zu schaffen. Hierzu muss der Schaum eine spezielle Dicke, Dichte und Stauchhärte aufweisen. Gleichzeitig darf der Schaum aber nicht zu leicht unter Belastung reißen, damit an dem Selbstklebeartikel Objekte befestigt werden können. Hierfür sind ebenfalls die Parameter Dicke und Dichte geeignet auszuwählen.

Es wurde nun gefunden, das für die zumindest eine geschäumte Schicht des Trägermaterials eine Dicke von mindestens 500 µm und höchstens 1800 µm, bevorzugt von mindestens 850 µm und höchstens 1500 µm für Klebestrips für die Verklebung auf rauen Untergründen mit hoher Halteleistung besonders gut geeignet sind. Typische Rauigkeiten bei Raufasertapete können im Bereich von 500 µm oder sogar darüber liegen. Sind die Schäume zu dünn, dann ist die Anpassungsfähigkeit an den rauen Verklebungsuntergrund unzureichend. Die Klebeschicht kommt nur unvollständig mit der Oberfläche des Klebuntergrunds in Kontakt was zu reduzierter Verklebungsfestigkeit führt. Ist der Schaumträger zu dick, dann führt die Belastung, z. B. indem ein Objekt an einen Haken gehängt wird, zu einer übermäßigen Auslenkung der Verklebung und möglicherweise sogar Reißen des Schaums.

Zudem hat sich gezeigt, dass eine Dichte von mindestens 30 kg/m³ und höchstens 120 kg/m³, bevorzugt von mindestens 45 kg/m³ und höchstens 100 kg/m³ zu Klebestrips führen, die zur Lösung der Aufgabe besonders geeignet sind. Niedrige Dichten erlauben ebenfalls die erforderliche Anpassungsfähigkeit. Zu geringe Dichten allerdings bergen die Gefahr, dass der Schaumträger unter Belastung reißt. Zu hohe Dichten resultieren in unzureichender Anpassungsfähigkeit.

Weiterhin ist für die Schaumschicht des Trägermaterials auch eine bestimmte Stauchhärte (Compression Stress, 50 % nach ISO 3386-1) nämlich von mindestens 50 kPa und höchstens 300 kPa, bevorzugt von mindestens 70 kPa und höchstens 200 kPa wichtig. Systeme mit zu geringer Stauchhärte weisen üblicherweise geringe Reißerbeständigkeit auf. Zu hohe Stauchhärten erlauben nur unvollständige Anpassungsfähigkeit des Klebestrips an die raue Verklebungsoberfläche. Dies äußert sich dann positiv in der Halteleistung.

Für den Ablöseprozess hat sich zudem eine Zugfestigkeit (nach ISO 1926, Prüfgeschwindigkeit 500 mm/min) in Ablöserichtung von mindestens 500 kPa, bevorzugt von mindestens 700 kPa vorteilhaft erwiesen. Über die Zugfestigkeit trägt die geschäumte Schicht des Trägermaterials zur Reißerbeständigkeit des Klebestrips bei. Ist die Zugfestigkeit zu gering, kann der Klebeartikel beim durch dehnendes Verstrecken durchgeführten Ablösen reißen. In diesem Fall würde eine höhere Anforderung an die Zugfestigkeit der Klebeschichten gestellt, was den Formulierungsspielraum einschränkt und das Erreichen anderer klebtechnischer Eigenschaften verkompliziert.

Für die Schaumschicht des Trägermaterials wird darüber hinaus eine Zugdehnung (nach ISO 1926, Prüfgeschwindigkeit 500 mm/min) in Ablöserichtung von mindestens 500 % gewählt, wenn die Stauchhärte bei mindestens 120 kPa liegt, und von mindestens 300 %, wenn die Stauchhärte unterhalb 120 kPa liegt. Eine Mindestdehnbarkeit ist erforderlich, um ausreichend Wegstrecke für das Ablösen der Klebemasse vom Untergrund zu erlauben.

Im Zusammenhang mit der Zugfestigkeit und der Zugdehnung wird auf die Ablöserichtung des Klebeprodukts hingewiesen. Dies ist wichtig, da sich die mechanischen Eigenschaften von Schaumschichten, die im Trägermaterial eingesetzt werden, in Richtung quer ihrer Herstellrichtung und in Richtung längs ihrer Herstellrichtung typischerweise unterscheiden können. Für die erfindungsgemäßen Klebeprodukte ist es zunächst unerheblich, ob die Schaumschicht so zum Einsatz kommt, dass die Ablöserichtung parallel zur Längsrichtung des Herstellprozesses der Schaumschicht ist oder zur Querrichtung. Entscheidend ist, dass die mechanischen Eigenschaften der Schaumschicht den oben genannten Parameterbereichen gemäß der im Ablöseprozess vorkommenden Beanspruchung entsprechen. Ist das Klebeprodukt beispielsweise so hergestellt, dass die Schaumschicht im Ablöseprozess quer zu ihrer Herstellrichtung verstreckt wird, dann sind die mechanischen Eigenschaften der Schaumschicht quer zur Herstellrichtung der Schaumschicht relevant. Ist das Klebeprodukt dagegen so hergestellt, dass die Schaumschicht im Ablöseprozess längs zu ihrer Herstellrichtung verstreckt wird, dann sind die mechanischen Eigenschaften der Schaumschicht längs zur Herstellrichtung der Schaumschicht relevant.

Vorteilhaft ist zudem ein Elastizitätsmodul von höchstens 7 MPa. Diese mechanische Kenngröße beschreibt den Kraftverlauf im Anfangsstadium des Dehnens eines Materials und gibt eine gewisse Wiederstandfähigkeit gegenüber seiner Erstverformung an. Da der Klebestrip auf leicht spaltbaren Untergründen anwendbar und hier eine zerstörungsfreie Wiederablösung möglich sein soll, ist ein geringer E-Modul bevorzugt.

Die Schaumschicht kann optional ein- oder beidseitig mit einer Filmschicht versehen sein ("befilmt sein"). Filmschichten sind dann typischerweise weniger als 75 µm dick. Bevorzugt wird ohne Befilmung gearbeitet. Vorteile der Befilmung findet man häufig in der Halteleistung. Negativ dagegen ist ihr Einfluss auf die zum Dehnen aufzubringende Kraft (Stripkraft), die höher ist als bei Verwendung eines unbefilmten Schaums. Eine zu hohe Stripkraft birgt die Gefahr, dass der empfindliche Verklebungsuntergrund beim Ablöseprozess geschädigt wird.

Als Material für die Schaumschicht wird Polyolefin bevorzugt. Sehr gut geeignet sind Polyethylen-basierte Schaumstoffe. Die Oberfläche(n) der Schaumschicht kann/können chemisch und/oder physikalisch vorbehandelt sein, um z. B. die Verankerung weiterer Schichten darauf zu verbessern. Beispiele für Vorbehandlungsmöglichkeiten beinhalten Corona, Beflammung, Bedampfung, Fluorierung, Plasma.

Erfindungsgemäße Selbstklebeartikel weisen folgendes Eigenschaftsprofil auf:

| *Eigenschaft* | *Physikalische Messgröße* | *Einheit* | *Wert(ebereich)* | *Messmethode* |
|---|---|---|---|---|
| Halteleistung | Kippscherstandzeit auf Tapete, Belastung 1,0 kg | Tage | > 20 Tage | Test VII |
| Ablöseverhalten | Stripkraft | N/cm | ≤ 11 N/cm | Test VIII |

Für stripbare Selbstklebeprodukte ist zudem die Reißerbeständigkeit wichtig, so dass gewährleistet werden kann, dass das Klebeprodukt beim Ablösen durch dehnendes Verstrecken nicht reißt. Ein Schaumträger weist selbst eine relativ geringe Zugfestigkeit auf. Um ausreichende Reißerbeständigkeit für die stripbaren Klebeprodukte zu erhalten, müssen auch die Klebeschichten einen Beitrag zur Reißerbeständigkeit leisten. Eine hiermit in Verbindung stehende Größe ist die Zugfestigkeit der einzelnen Klebeschichten. Diese, gemessen nach Test IX, sollte vorteilhaft bei mindestens 5,0 MPa liegen, bevorzugt bei mindestens 8,0 MPa. Zumindest eine Klebeschicht weist vorteilhaft eine Zugfestigkeit von mindestens 8,0 MPa, bevorzugt von mindestens 10,0 MPa auf. Eine Zugfestigkeit von mindestens 8,0 MPa ist erforderlich, wenn die Klebeprodukte eine vergleichsweise geringe Schichtstärke der erfindungsgemäßen Klebeformulierung aufweisen (z. B. kleiner als 250 µm). Alternativ oder ergänzend kann in das Selbstklebeprodukt eine weitere Schicht eingeführt werden, die eine höhere Zugfestigkeit, z. B. ein Trägermaterial oder eine weitere Klebemasseschicht mitbringt. Zudem hängt die Reißerbeständigkeit von der Stripkraft ab. Je höher diese ist, desto höher sind auch die Anforderungen an die Zugfestigkeit des Selbstklebeprodukts. Umgekehrt erlauben Selbstklebeprodukte mit geringerer Stripkraft Zugfestigkeiten, die auf einem geringeren Niveau liegen. Geringere Stripkräfte erlauben zudem ein schonenderes Wiederablösen von empfindlichen Haftuntergründen wie Raufasertapete oder Putz, so dass Zerstörung beim Ablösen effektiver verhindert werden kann.

Bei den erfindungsgemäßen Selbstklebeartikeln handelt es sich um doppelseitig haftklebrige Selbstklebeprodukte, insbesondere um gestanzte oder in anderer Weise zugeschnittene Klebeband- oder Folienabschnitte (Klebestrips). Klebestrips können in beiden Dimensionen beliebige Ausmaße annehmen. Sie weisen typischerweise eine Länge von mindestens 5 mm auf. Längen können auch bei 10 mm, 20 mm, 50 mm, 100 mm oder darüber liegen. Breiten liegen typischerweise bei mindestens 2 mm. Breiten können auch bei 5 mm, 10 mm, 20 mm, 50 mm oder darüber liegen. Auch wenn erfindungsgemäße Selbstklebeartikel vorteilhaft als Klebestrips eingesetzt werden können, so bieten sich für erfindungsgemäße Produktaufbauten auch als Montageklebeband vielfältige Anwendungsmöglichkeiten. Bei solchen Produktdesigns liegt die Klebebandbreite dann z. B. ebenfalls bei 5 mm, 10 mm, 20 mm, 50 mm oder darüber. Klebebänder werden aber zu längeren Abschnitten konfektioniert, so z. B. 5 m, 10 m oder sogar 50 m. Diese Bänder werden dann praktischerweise in aufgerollter Form dem Anwender angeboten.

Die Klebestrips sind üblicherweise länger als breit, wobei die Verstreckung zum Wiederablösen dann vorteilhaft entlang der Längsachse liegt. Alle Winkel der Stanzlinge können 90° betragen oder davon abweichen. Es sind auch Formen möglich, bei denen sich der Klebestrip in zumindest eine Richtung verjüngt und insbesondere zu einer Spitze zuläuft. Kanten können auch rund gestaltet sein.

Klebestrips können Anfasserbereiche, die zur Ober- und/oder Unterseite des Klebestrips nicht klebrig sind, enthalten. Dieser Bereich dient als Anfasser, an dem gezogen wird, um das dehnende Verstrecken insbesondere in der Verklebungsebene zu erzielen, und ist daher bevorzugt auf beiden Seiten nicht haftklebrig ausgerüstet, insbesondere durch das Aufbringen von Schichten aus Metall, Kunststoff- oder Papier, wie oben beschrieben. Der Anfasserbereich kann jedoch auch durch Bestrahlung, Bepuderung oder Neutralisation der Klebemasse erzeugt werden. Alternativ kann ein Lack oder ein Primer an den entsprechenden Stellen aufgetragen werden. Zudem kann die Oberfläche durch chemische Behandlung wie Ätzen verändert werden, um jeweils nichtklebende Zonen zu erzeugen. Eine Rauigkeit der Anfasserfolie mit einer Rauheit Sₐ von 0,10 bis 2,00 µm, bevorzugt von 0,15 bis 0,50 µm, sorgt für einen guten Klebverbund zwischen Folie und Haftklebstoff und kann daher vorteilhaft zu diesem Zweck ausgewählt werden. Die Rauheit ist dabei gemäß ISO 25178-2:2012(E) Abschnitt 4.1.7 definiert (siehe auch Test X).

Erfindungsgemäße Selbstklebeartikel werden insbesondere auf einem Trennliner (bevorzugt silikonisiertes Papier oder Folie) bereitgestellt. Der Liner kann einseitig trennend ausgestattet sein. Dann kommt vorteilhaft eine zweite Lage eines Liners zur Abdeckung der zweiten Oberfläche zum Einsatz. Der Liner kann auch beidseitig trennend ausgestattet sein.

Produktdicken können bei mindestens 700 µm und höchstens 2500 µm liegen, bevorzugt bei mindestens 900 µm und höchstens 1800 µm.

Schließlich umfasst die vorliegende Erfindung auch die Verwendung der erfindungsgemäßen Klebemasse oder des erfindungsgemäßen Klebebandes zur Verklebung auf Raufasertapete, insbesondere gestrichener Raufasertapete, oder auf Putz, insbesondere auf gestrichenem Putz. Auch für eine Verklebung auf anderen rauen und/oder leicht spaltbaren Oberflächen wie Holz, Vertäfelungen, Furnierhölzer, Strukturtapeten; Paneelen oder Wandtafeln sind Klebemasse und Klebeband der vorliegenden Erfindung besonders geeignet.

Mögliche weitere Anwendungen entsprechender Selbstklebebänder finden sich in der DE 42 33 872 A1, DE 195 11 288 A1, US 5,507,464 A, US 5,672,402 A und WO 94/21157 A1, spezielle Ausführungsformen sind zum Beispiel in der DE 44 28 587 A1, DE 44 31 914 A1, WO 97/07172 A1, DE 296 23 112 U1, WO 98/03601 A1 und DE 196 49 636 A1, DE 198 13 081 A1, DE 197 23 177 A1, DE 297 23 198 A1, DE 297 23 614 U1, DE 197 56 084 A1, DE 197 56 816 A1, DE 198 42 864 A1, DE 198 42 865 A1, WO 99/31193 A1, WO 99/37729 A1 und WO 99/63018 A1.

### Testmethoden

### Test I - Molekulargewicht, GPC

Das gewichtsmittlere Molekulargewicht Mw wurde mittels Gelpermeationschromatographie (GPC) bestimmt. Als Eluent wurde THF eingesetzt. Die Messung erfolgte bei 23 °C. Als Vorsäule wurde PSS-SDV, 5 µ, 10³ Ä, ID 8,0 mm x 50 mm verwendet. Zur Auftrennung wurden die Säulen PSS-SDV, 5 µ, 10³ sowie 104 und 106 mit jeweils ID 8,0 mm x 300 mm eingesetzt. Die Probenkonzentration betrug 4 g/l, die Durchflussmenge 1,0 ml pro Minute. Es wurde gegen PS Standards gemessen. (µ = µm; 1 Å = 10-10 m).

GPC bietet sich zudem als messtechnisches Verfahren zur Bestimmung des Diblock-Anteils an, sofern Herstellerangaben für ein Blockcopolymer nicht zur Verfügung stehen sollten. Für die im Sinne dieser Erfindung einsetzbaren durch lebende anionische Polymerisation hergestellten Blockcopolymere sind die Molmassenverteilungen typischerweise ausreichend eng, so dass Polymermoden, die sich Triblockcopolymeren einerseits und Diblockcopolymeren andererseits zuordnen lassen, ausreichend voneinander aufgelöst im Elugramm auftreten. Der Diblock-Anteil lässt sich dann als Integral des entsprechenden Molmassensignals quantifizieren, bezogen auf die Summe der Integrale der Molmassensignale der Diblock-Mode und der übrigen Blockcopolymer-Moden (Triblock-Mode oder Mode eines höheren Blockcopolymers).

### Test II- DSC

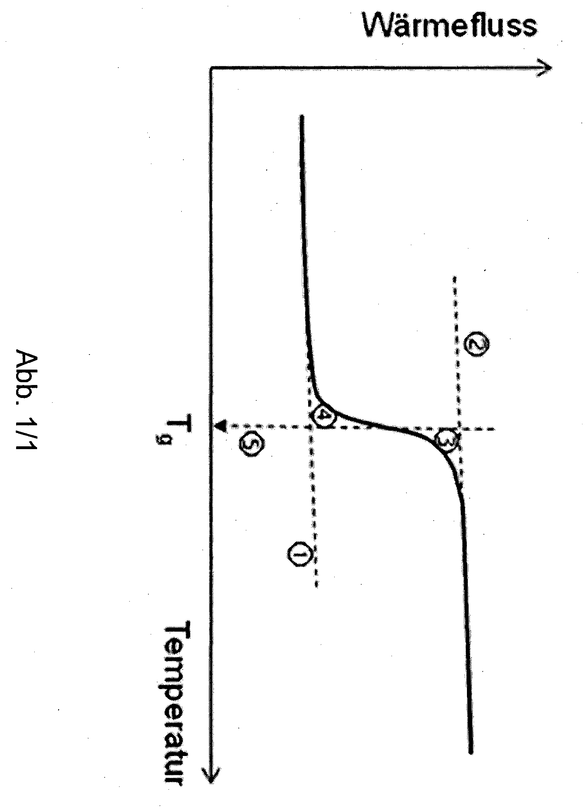

Die Glasübergangstemperatur von Polymerblöcken in Blockcopolymeren wurde mittels dynamischer Scanning Kalorimetrie (DSC) bestimmt. Dazu wurden ca. 5 mg der unbehandelten Blockcopolymerproben in ein Aluminiumtiegelchen (Volumen 25 µL) eingewogen und mit einem gelochten Deckel verschlossen. Zur Messung wurde ein DSC 204 F1 der Firma Netzsch verwendet und unter Stickstoff zur Inertisierung gearbeitet. Die Probe wurde zunächst auf -150 °C abgekühlt, mit einer Heizrate von 10 K/min bis +150 °C aufgeheizt und erneut auf -150 °C abgekühlt. Die sich anschließende zweite Heizkurve wurde erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet (siehe dazu Figur 1). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

### Test III - DACP-Wert

Der DACP ist der Diaceton-Trübungspunkt und wird im Rahmen der vorliegenden Erfindung folgendermaßen bestimmt: In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

Zur Bestimmung von DACP-Werten wird auf C. Donker, PSTC Annual Technical Seminar, Proceedings, S. 149-164, Mai 2001, verwiesen.

### Test IV - MMAP-Wert

MMAP ist der gemischte-Methylcyclohexan-Anilin-Trübungspunkt, der unter Verwendung eines modifizierten ASTM C 611-Verfahrens bestimmt wird. Im Rahmen der vorliegenden Erfindung wird der MMAP-Wert bestimmt, indem 5,0 g Testsubstanz, also das zu untersuchende Klebharzmuster, in ein trockenes Probenglas eingewogen und mit 10 mL trockenem Anilin (CAS [62-53-3], ≥ 99,5%, Sigma-Aldrich #51788 oder vergleichbar) und 5 mL trockenem Methylcyclohexan (CAS [108-87-2], ≥ 99%, Sigma-Aldrich #300306 oder vergleichbar) versetzt werden. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

Zur Bestimmung von MMAP-Werten wird auf C. Donker, PSTC Annual Technical Seminar, Proceedings, S. 149-164, Mai 2001, verwiesen.

### Test V - Harzerweichungstemperatur

Die Klebharzerweichungstemperatur wird nach der einschlägigen Methodik durchgeführt, die als Ring & Ball bekannt ist und nach ASTM E28 standardisiert ist.

### Test VI - Schmelzviskosität von Weichharzen

Zur Bestimmung der Schmelzviskosität der Weichharze wurde ein Schubspannungssweep in einem schubspannungsgeregelten DSR 200 N Rheometer der Firma Rheometrics Scientific in Rotation durchgeführt. Es kam ein Kegel/Platte-Messsystem mit einem Durchmesser von 25 mm (Kegelwinkel 0,1002 rad) zur Anwendung, der Messkopf war luftgelagert und geeignet für Normalkraftmessungen. Der Spalt betrug 0,053 mm und die Messtemperatur 25 °C. Die Frequenz wurde von 0,002 Hz bis 200 Hz variiert und die Schmelzviskosität bei 1 Hz registriert.

### Test VII - Kippschertest

Zur Bestimmung der Kippscherfestigkeit wird die zu prüfende 750 µm dicke Klebstofffolie bzw. der trägerhaltige Prüfling der Abmessung 20 mm x 50 mm, welche an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm), zunächst auf eine mit Raufasertapete (Typ Erfurt 52 mit Alpina Weiß gestrichen (Lammfellrolle)) ausgerüsteten Substratplatte verklebt (Andruckzeit = 5 sec). Auf die Rückseite des Klebestreifens wird mittig auf eine Basisplatte aus Stahl der Abmessung 40 mm x 20 mm x 3 mm (Länge x Breite x Dicke) verklebt. Auf die Basisplatte wird ein 10 cm langer Stahlstift aufgesteckt, welcher vertikal auf der Plattenfläche sitzt. Die erhaltenen Probekörper werden mit einer Kraft von 100 N zusammengepresst und 5 min im unbelasteten Zustand belassen. Nach Beaufschlagung der gewählten Kippscherbelastung durch Anhängen eines Gewichtes (10 N bei 20 mm Hebelarm) wird die Zeit bis zum Versagen der Verklebung (= Kippscherstandzeit) ermittelt. Das Testklima ist dabei 23 °C bei einer relativen Luftfeuchtigkeit von 50%. Für viele Anwendungen gilt je höher die Kippscherstandzeit, desto besser. Sind 20 Tage erreicht, wird der Test abgebrochen und als Ergebnis > 20 Tage notiert.

### Test VIII - Stripkraft

Zur Ermittlung der Ablösekraft (Stripkraft) wird ein Klebproduktmuster der Abmessungen 50 mm * 20 mm (Länge * Breite), mit am oberen Ende nicht haftklebrigem Anfasserbereich, zwischen zwei Stahlplatten (deckungsgleich zueinander angeordnet) der Abmessungen 60 mm x 30 mm mittig verklebt. Die so erhaltenen Probekörper werden mit einer Kraft von 500 N für 5 sec angedrückt und nachfolgend 5 min im unbelasteten Zustand belassen. Die Verklebungen werden 24 h bei 23 °C und 50 % rel. Luftfeuchtigkeit gelagert. Der Klebfolienstreifen wird mit einer Zuggeschwindigkeit von 1000 mm/min parallel zur Verklebungsebene und kontaktfrei (hierzu wird in einem klebefolienfreien Bereich ein Abstandshalter, der der Dicke der zu untersuchenden Klebstofffolie entspricht, zwischen den Stahlplatten eingeschoben) zu den Kantenbereichen der beiden Stahlplatten, herausgelöst. Dabei wird die erforderliche Ablösekraft in N gemessen. Angegeben wird das Maximum der Stripkraftwerte in N/cm.

### Test IX - Zugfestigkeit

Klebemassemuster werden zu Schichten mit einer Dicke von 750 µm gepresst. Daraus werden Prüfmuster in Hantelform (Prüfstab 5A nach DIN EN ISO 527) ausgestanzt. Diese werden bei 23 °C und 50 % rel. Luftfeuchtigkeit äquilibriert. An den beiden Endstücken wird ein Prüfmuster in eine Zugprüfmaschine eingespannt. Mit einer Geschwindigkeit von 1000 mm/min wird das Prüfmuster gedehnt und dabei die Kraft aufgenommen. Die Zugfestigkeit ist diejenige Kraft bezogen auf die Querschnittsfläche des Musterns (Stegbreite x Schichtdicke), die bei der Bruchdehnung aufgezeichnet wird. Dies wird in MPa angegeben.

### Test X - Rauigkeit

Die Oberflächenrauheit der Anfasserschicht wurde mit einem Weißlicht-Interferometer Contour GT® 3D Optical Microscope der Firma Bruker bestimmt. Es lag die ISO 25178-602 zu GrundeDas Gerät wurde im Vertical Scanning- (VSI-) Modus betrieben. Es wurde ein 50x-Objektiv und eine 1x-Feldlinse genutzt, so dass eine fünfzigfache Vergrößerung resultierte. Der Sichtbereich betrug 317 µm x 238 µm. Auf diese Fläche bezieht sich auch die ausgewertete Oberflächenrauheit Sₐ. Aus dem optisch aufgenommenen Höhenprofil wurde aus den Rohdaten gemäß ISO 25178-2:2012 (E) Abschnitt 4.1.7 die Oberflächenrauheit als Mittelwert des 3D-Profils Sₐ erhalten. Sₐ ist das arithmetische Mittel der Beträge der Höhenwerte z aller in der x,y-Ebene des Sichtbereichs liegenden vermessenen Punkte. Es wurden jeweils drei Messungen durchgeführt und der Mittelwert der Einzelmessungen in nm angegeben. Der Abstand der vermessenen Punkte zueinander betrug sowohl in x-als auch in y-Richtung 0,5 µm.

### Beispiele

### Klebemassen

Alle Knetmassen wurden in einem beheizbaren Doppelsigmakneter der Firma Aachener Maschinenbau Küpper Typ III-P1 hergestellt. Der Mantel des Kneters wurde durch ein Thermalölheizbad der Firma Lauda erwärmt. Hierbei wurde eine Badtemperatur von 190 °C eingestellt. Während des gesamten Knetvorgangs lag eine CO2-Schutzgasatmosphäre an. Der Kneter wurde bei 50 U/min betrieben.

Zunächst wurden die Elastomere zusammen mit dem festen Alterungsschutzmittel Irganox 1010 eingewogen und im Kneter vorgelegt. Danach wurden etwa 10% der Menge an Festharz zugegeben und für 15 Minuten geknetet. Nachfolgend wurde im Abstand von jeweils 10 Minuten jeweils ein Drittel der verbleibenden Menge an Klebharz sowie schließlich Weichharz zugegeben und eingearbeitet.

Nach Abschluss des Knetvorgangs wurden die Knetmassen dem Kneter entnommen und auf Raumtemperatur erkalten lassen.

Die erkalteten Massen wurden zwischen zwei Lagen silikonisiertem Trennpapier positioniert und mit einer Heißpresse der Firma Lauffer GmbH & CO KG Typ RLKV 25 bei 130 °C zu Handmustern mit einer Schichtdicke von 150 µm oder 750 µm (je nach durchzuführendem Test) verpresst.

### Eingesetzte Rohmaterialien

| Klebmasserohstoffe | | Typ | Hersteller | Charakterisierung |
|---|---|---|---|---|
| Elastomere | Kraton D1102 AS | Polystyrol-Polybutadien Blockcopolymer | Kraton Polymers | Triblockcopolymer mit 17 %* Diblock |
| | Kraton D1118 ES | Polystyrol-Polybutadien Blockcopolymer | Kraton Polymers | Triblockcopolymer mit 78 %* Diblock |
| Klebharze | Dercolyte A115 Piccolyte A115 | α-Pinen Harz α-Pinen Harz | DRT Pinova | |
| Weich harze | Wingtack 10 | C5-Harz | Cray Valley | |
| Alterungsschutzmittel | Irganox 1010 | Sterisch gehindertes Phenol | BASF | |

| | | | | |
|---|---|---|---|---|
| *) cf. Produktinformation Kraton "The Global Connection for Polymer and Compound Solutions - Product and Application Guide" (KPP/TPG/2011) von 2011. | | | | |

| | | Dicke | Dichte | Zugfestigkeit | Zugdehnung | Stauchhärte |
|---|---|---|---|---|---|---|
| Schaum S1 (Vergleich) | Alveo TL 0700.8 | 800 µm | 143 kg/m³ | 1900 kPa (quer) | 470 % (quer) | 350 kPa |
| Schaum S2 | Alveo TL 1501 | 1000 µm | 67 kg/m³ | 770 kPa (quer) | 370 % (quer) | 140 kPa |
| Schaum S3 | Alveo TL1000.9 | 900 µm | 95 kg/m³ | 1100 kPa (quer) | 400 % (quer) | 190 kPa |
| Schaum S4 (Vergleich) | Alveo TA 1001 | 1000 µm | 95 kg/m³ | 830 kPa (quer) | 240 % (quer) | 190 kPa |
| Schaum S5 | Alveo TEE 2001 | 1000 µm | 47 kg/m³ | 550 kPa (quer) | 309 % (quer) | 106 kPa |

| | | | | | | |
|---|---|---|---|---|---|---|
| (Herstellerangaben) | | | | | | |

Der Vergleichsschaum S1 weist eine im Sinne dieser Erfindung zu hohe Dichte bzw. zu hohe Stauchhärte auf. Der Vergleichsschaum S4 weist eine im Sinne dieser Erfindung in Ablöserichtung zu geringe Zugdehnung auf.

Haftklebemasse H1 (Typ Haftklebemasse HKA1):

| | | | |
|---|---|---|---|
| Elastomer | Kraton D1102 AS | Polystyrol-Polybutadien-Blockcopolymer | 21,5 Gew.-% |
| | Kraton D1118 ES | Polystyrol-Polybutadien-Blockcopolymer | 28,0 Gew.-% |
| Klebharz | Dercolyte A115 | Alpha-Pinen-Harz | 45,0 Gew.-% |
| Weich harz | Wingtack 10 | aliphatisches Kohlenwasserstoffharz | 5,0 Gew.-% |
| Weitere Bestandteile | Irganox 1010 | Antioxidationsmittel | 0,5 Gew.-% |

Gesamtelastomergehalt 49,5 Gew.-%; Diblock-Anteil 51,5 Gew.-%; Weichharz-Anteil 5,0 Gew.-%.

Haftklebemasse H2 (Typ Haftklebemasse HKA1):

| | | | |
|---|---|---|---|
| Elastomer | Kraton D1102 AS | Polystyrol-Polybutadien-Blockcopolymer | 27,5 Gew.-% |
| | Kraton D1118 ES | Polystyrol-Polybutadien-Blockcopolymer | 16,5 Gew.-% |
| Klebharz | Piccolyte A115 | Alpha-Pinen-Harz | 46,0 Gew.-% |
| Weich harz | Wingtack 10 | aliphatisches Koh lenwasserstoffharz | 9,5 Gew.-% |
| Weitere Bestandteile | Irganox 1010 | Antioxidationsmittel | 0,50 Gew.-% |

Gesamtelastomergehalt 44,0 Gew.-%; Diblock-Anteil 44,1 Gew.-%; Weichharz-Anteil 9,5 Gew.-%.

Haftklebemasse H3 (Typ Haftklebemasse HKB1)

| | | | |
|---|---|---|---|
| Elastomer | Kraton D1102 AS | Polystyrol-Polybutadien-Blockcopolymer | 42,0 Gew.-% |
| | Kraton D1118 ES | Polystyrol-Polybutadien-Blockcopolymer | 10,0 Gew.-% |
| Klebharz | Dercolyte A115 | Alpha-Pinen-Harz | 43,5 Gew.-% |
| Weich harz | Wingtack 10 | aliphatisches Koh lenwasserstoffharz | 4,0 Gew.-% |
| Weitere Bestandteile | Alterungsschutzmittel | Antioxidationsmittel | 0,50 Gew.-% |

Gesamtelastomergehalt 52,0 Gew.-%; Diblock-Anteil 28,7 Gew.-%; Weichharz-Anteil 4,0 Gew.-%;
Zugfestigkeit 12,7 MPa.

Haftklebemasse H4 (Typ Haftklebemasse HKA2 bzw. HKB2)

| | | | |
|---|---|---|---|
| Elastomer | Kraton D1102 AS | Polystyrol-Polybutadien-Blockcopolymer | 45,0 Gew.-% |
| Klebharz | Piccolyte A115 | Alpha-Pinen-Harz | 44,5 Gew.-% |
| Weich harz | Wingtack 10 | aliphatisches Koh lenwasserstoffharz | 10,0 Gew.-% |
| Weitere Bestandteile | Irganox 1010 | Antioxidationsmittel | 0,50 Gew.-% |

Gesamtelastomergehalt 45,0 Gew.-%; Diblock-Anteil 17,0 Gew.-%; Weichharz-Anteil 10,0 Gew.-%.

### Herstellung der Klebeprodukte

Die Schaumträger und Klebemassen (in 150 µm Dicke) werden auf eine handliche Größe zugeschnitten und mit einer Andruckrolle per Hand direkt aufeinander laminiert. Dabei ist darauf zu achten, dass die Maschinenrichtung des Schaums mit der Maschinenrichtung der Klebemasse übereinstimmt. Danach werden die Muster 2 Wochen bei 23 °C und 50 % rel. Luftfeuchtigkeit gelagert, um eine gute Verankerung der Klebeschichten auf dem Schaumträger zu gewährleisten. Es werden (je nach Prüfmethode) Prüfkörper z. B. Streifen mit 50 mm Länge und 20 mm Breite quer zur Maschinenrichtung (cross-direction) ausgestanzt.

**Ausprüfung der Klebeprodukte**

| | Halteleistung 1,0 kg | Stripkraft |
|---|---|---|
| Selbstklebeartikel A | | |
| H2 / S5 / H3 | > 20 Tage | 8 N/cm |
| H1 / S5 / H3 | > 20 Tage | 10 N/cm |
| Selbstklebeartikel B | | |
| H4 / S3 / H4 | > 20 Tage | 10 N/cm |
| H4 / S2 / H4 | > 20 Tage | 10 N/cm |

| Vergleich | | |
|---|---|---|
| H1 / S4 / H3 | > 20 Tage | 12 N/cm |
| H3 / S1 / H3 | > 20 Tage | 15 N/cm |
| H4 / S4 / H4 | > 20 Tage | 13 N/cm |
| H4 / S1 / H4 | > 20 Tage | 15 N/cm |
| H1 / S1 / H3 | > 20 Tage | 14 N/cm |
| H3 / S2 / H3 | > 20 Tage | 13 N/cm |

## Patentansprüche

1. Selbstklebeartikel, enthaltend
(i) zumindest ein Trägermaterial, das zumindest eine geschäumte Schicht enthält mit einer ersten Oberfläche A und einer zweiten Oberfläche B,
wobei die zumindest eine geschäumte Schicht des Trägermaterials
- eine Dicke von mindestens 500 µm, vorzugsweise mindestens 850 µm, und höchstens 1800 µm, vorzugsweise höchstens 1500 µm,
- eine Dichte von mindestens 30 kg/m³, vorzugsweise mindestens 45 kg/m³, und höchstens 120 kg/m³, vorzugsweise höchstens 100 kg/m³,
- eine Zugfestigkeit nach ISO 1926, Prüfgeschwindigkeit 500 mm/min, in Ablöserichtung von mindestens 500 kPa, vorzugsweise mindestens 700 kPa,
- eine Zugdehnung nach ISO 1926, Prüfgeschwindigkeit 500 mm/min, in Ablöserichtung von mindestens 300 %, vorzugsweise mindestens 500 %, sowie
- eine Stauchhärte nach ISO 3386-1, 50 % Eindrucktiefe, von mindestens 50 kPa, vorzugsweise mindestens 70 kPa, und höchstens 300 kPa, vorzugsweise höchstens 200 kPa, aufweist,
(ii) eine Haftklebemasseschicht HKA, die der Oberfläche A zugeordnet ist,
(iii) eine Haftklebemasseschicht HKB, die der Oberfläche B zugeordnet ist,
(iv) optional eine oder mehrere weitere Schichten,
**dadurch gekennzeichnet, dass** die Haftklebemasseschichten HKA und HKB eine Haftklebemasseschichtkombination 1 oder eine Haftklebemasseschichtkombination 2 bilden,
wobei bei Haftklebemasseschichtkombination 1 Haftklebemasseschicht HKA eine Haftklebemasseschicht HKA1 ist, die
i. zumindest eine Elastomerkomponente vom Typ eines Polybutadien-Polyvinylaromaten-Blockcopolymers mit einem Anteil in Bezug auf die Gesamtklebemasse von 42 Gew.-% bis 55 Gew.-% und einem Diblockanteil in Bezug auf den Gesamtblockcopolymergehalt von 32 Gew.-% bis 55 Gew.-%, vorzugsweise bis 50 Gew.-%,
ii. zumindest ein Klebharz, das ein Kohlenwasserstoffharz mit einem DACP-Wert, nach Test III der Beschreibung, von mindestens +5°C und höchstens +50°C und einem MMAP-Wert, nach Test IV der Beschreibung, von mindestens +50°C und höchstens +85°C ist,
iii. optional zumindest ein Weichharz mit einem Anteil von 0 Gew.-% bis 15 Gew.-%, bezogen auf die Gesamtklebemasse,
iv. optional weitere Additive
enthält, und wobei bei Haftklebemasseschichtkombination 1 Haftklebemasseschicht HKB eine Haftklebemasseschicht HKB1 ist, die eine Zugfestigkeit von mindestens 9 MPa, bevorzugt von mindestens 11 MPa aufweist,
und wobei bei Haftklebemasseschichtkombination 2 Haftklebemasseschicht HKA eine Haftklebemasseschicht HKA2 und Haftklebemasseschicht HKB eine Haftklebemasseschicht HKB2 sind, die jeweils, aber unabhängig voneinander
v. zumindest eine Elastomerkomponente vom Typ eines Butadien-Blockcopolymers mit einem Anteil in Bezug auf die Gesamtklebemasse von 38 Gew.-% bis 48 Gew.-% und einem Diblockanteil in Bezug auf den Gesamtblockcopolymergehalt von 10 Gew.-% bis 30 Gew.-%,
vi. zumindest ein Klebharz, das ein Kohlenwasserstoffharz mit einem DACP-Wert, nach Test III der Beschreibung, von mindestens +5°C und höchstens +50°C und einem MMAP-Wert, nach Test IV der Beschreibung, von mindestens +50°C und höchstens +85°C ist,
vii. zumindest ein Weichharz mit einem Anteil von 2 Gew.-% bis 15 Gew.-%, bezogen auf die Gesamtklebemasse,
viii. optional weitere Additive
enthalten.

2. Selbstklebeartikel nach Anspruch 1, **dadurch gekennzeichnet, dass** die Haftklebemasseschicht HKB1
a) zumindest eine Elastomerkomponente vom Typ eines Polybutadien-Polyvinylaromaten-Blockcopolymers mit einem Anteil in Bezug auf die Gesamtklebemasse von 40 Gew.-% bis 60 Gew.-% und einem Diblockanteil in Bezug auf den Gesamtblockcopolymergehalt von 10 Gew.-% bis 30 Gew.-%,
b) zumindest ein Klebharz, das ein Kohlenwasserstoffharz mit einem DACP-Wertvon mindestens +5°C und höchstens +50°C und einem MMAP-Wert von mindestens +50°C und höchstens +85°C ist,
c) optional zumindest ein Weichharz mit einem Anteil von 0 Gew.-% bis 12 Gew.-%, bezogen auf die Gesamtklebemasse,
d) optional weitere Additive
enthält.

3. Selbstklebeartikel nach einem der vorstehenden Ansprüche, **dadurch gekennzeichnet, dass** mindestens eine der Elastomerkomponenten zu mindestens 90 Gew.-%, bezogen auf den Gesamtblockcopolymergehalt, aus mindestens einem Polybutadien-Blockcopolymer besteht, wobei das mindestens eine Polybutadien-Blockcopolymer Polymerblöcke, überwiegend gebildet durch Polymerisation von Vinylaromaten (A-Blöcke), vorzugsweise Styrol, und solche, überwiegend gebildet durch Polymerisation von 1,3-Butadien (B-Blöcke), enthält.

4. Selbstklebeartikel nach einem der vorstehenden Ansprüche, **dadurch gekennzeichnet, dass** mindestens eines der Klebharze ein Kohlenwasserstoffharz mit einem DACP-Wert von höchstens +45°C, ist.

5. Selbstklebeartikel nach einem der vorstehenden Ansprüche, **dadurch gekennzeichnet dass** mindestens eines der Klebharze ein Kohlenwasserstoffharz mit einem MMAP-Wert von höchstens +80°C, ist.

6. Selbstklebeartikel nach einem der vorstehenden Ansprüche, **dadurch gekennzeichnet dass** mindestens eines der Klebharze ein Kohlenwasserstoffharz mit einer Harzerweichungstemperatur nach ASTM E28 von mindestens +90°C, vorzugsweise mindestens +110°C, und höchstens +140°C, vorzugsweise höchstens +120°C, ist.

7. Selbstklebeartikel nach einem der vorstehenden Ansprüche, **dadurch gekennzeichnet, dass** die Klebemasse mindestens 5 Gew.-% und höchstens 15 Gew.-%, vorzugswiese höchstens 12 Gew.-%, Weichharz, jeweils bezogen auf die Gesamtklebemasse, enthält.

8. Selbstklebeartikel nach Anspruch 7, **dadurch gekennzeichnet, dass** das Weichharz eine Schmelzviskosität, nach Test VI der Beschreibung, von mindestens 25 Pa s aufweist,

9. Selbstklebeartikel nach einem der vorstehenden Ansprüche, **dadurch gekennzeichnet, dass** die Klebemasse höchstens 1 Gew.-%, vorzugsweise 0 Gew.-%, bezogen auf die Gesamtklebemasse, niederviskose Weichmacher mit einer Schmelzviskosität, nach Test VI der Beschreibung, von unter 25 Pa s enthält,

10. Selbstklebeartikel nach einem der vorstehenden Ansprüche, **dadurch gekennzeichnet, dass** er stripfähig ist.

11. Selbstklebeartikel nach einem der vorstehenden Ansprüche, **dadurch gekennzeichnet, dass** er ein Klebestrip ist.

12. Verwendung des Selbstklebeartikels nach einem der Ansprüche 1 bis 11 zur Verklebung auf Raufasertapete, insbesondere gestrichener Raufasertapete, Strukturtapeten, Holz, Paneelen, Wandtafeln, Vertäfelungen, Furnierhölzern oder auf Putz, insbesondere gestrichenem Putz.

## Claims

1. Self-adhesive article comprising
(i) at least one carrier material which comprises at least one foamed layer having a first surface A and a second surface B,
wherein the at least one foamed layer of the carrier material has
- a thickness of at least 500 µm, preferably at least 850 µm, and at most 1800 µm, preferably at most 1500 µm,
- a density of at least 30 kg/m³, preferably at least 45 kg/m³, and at most 120 kg/m³, preferably at most 100 kg/m³,
- an ISO 1926 tensile strength - testing velocity 500 mm/min - in detachment direction of at least 500 kPa, preferably at least 700 kPa,
- an ISO 1926 tensile elongation - testing velocity 500 mm/min - in detachment direction of at least 300%, preferably at least 500%, and
- an ISO 3386-1 compression stress - 50% indentation depth - of at least 50 kPa, preferably at least 70 kPa, and at most 300 kPa, preferably at most 200 kPa,
(ii) a pressure-sensitive adhesive layer HKA which is assigned to the surface A,
(iii) a pressure-sensitive adhesive layer HKB which is assigned to the surface B,
(iv) optionally one or more further layers, **characterized in that** the pressure-sensitive adhesive layers HKA and HKB form a pressure-sensitive adhesive layer combination 1 or a pressure-sensitive adhesive layer combination 2,
wherein, for pressure-sensitive adhesive layer combination 1, pressure-sensitive adhesive layer HKA is a pressure-sensitive adhesive layer HKA1 which comprises
i. at least one elastomer component of the type of a polybutadiene-polyvinylaromatic block copolymer having a fraction in relation to the total adhesive of 42 wt% to 55 wt% and a diblock fraction in relation to the total block copolymer content of 32 wt% to 55 wt%, preferably to 50 wt%,
ii. at least one tackifier resin which is a hydrocarbon resin having a DACP as per Test III in the description of at least +5°C and at most +50°C and an MMAP as per Test IV in the description of at least +50°C and at most +85°C,
iii. optionally at least one plasticizing resin having a fraction of 0 wt% to 15 wt%, based on the total adhesive,
iv. optionally further additives
and wherein, for pressure-sensitive adhesive layer combination 1, pressure-sensitive adhesive layer HKB is a pressure-sensitive adhesive layer HKB1 which has a tensile strength of at least 9 MPa, preferably of at least 11 MPa,
and wherein, for pressure-sensitive adhesive layer combination 2, pressure-sensitive adhesive layer HKA is a pressure-sensitive adhesive layer HKA2 and pressure-sensitive adhesive layer HKB is a pressure-sensitive adhesive layer HKB2, which each, but independently of one another, comprise
v. at least one elastomer component of the type of a butadiene block copolymer having a fraction in relation to the total adhesive of 38 wt% to 48 wt% and a diblock fraction in relation to the total block copolymer content of 10 wt% to 30 wt%,
vi. at least one tackifier resin which is a hydrocarbon resin having a DACP as per Test III in the description of at least +5°C and at most +50°C and an MMAP as per Test IV in the description of at least +50°C and at most +85°C,
vii. at least one plasticizing resin having a fraction of 2 wt% to 15 wt%, based on the total adhesive,
viii. optionally further additives.

2. Self-adhesive article according to Claim 1, **characterized in that**
the pressure-sensitive adhesive layer HKB1 comprises
a) at least one elastomer component of the type of a polybutadiene-polyvinylaromatic block copolymer having a fraction in relation to the total adhesive of 40 wt% to 60 wt% and a diblock fraction in relation to the total block copolymer content of 10 wt% to 30 wt%,
b) at least one tackifier resin which is a hydrocarbon resin having a DACP of at least +5°C and at most +50°C and an MMAP of at least +50°C and at most +85°C,
c) optionally at least one plasticizing resin having a fraction of 0 wt% to 12 wt%, based on the total adhesive,
d) optionally further additives.

3. Self-adhesive article according to either of the preceding claims, **characterized in that** at least one of the elastomer components consists to an extent of at least 90 wt%, based on the total block copolymer content, of at least one polybutadiene block copolymer, wherein the at least one polybutadiene block copolymer comprises polymer blocks predominantly formed by polymerization of vinylaromatics (A blocks), preferably styrene, and polymer blocks predominantly formed by polymerization of 1,3-butadiene (B blocks).

4. Self-adhesive article according to any of the preceding claims, **characterized in that** at least one of the tackifier resins is a hydrocarbon resin having a DACP of at most +45°C.

5. Self-adhesive article according to any of the preceding claims, **characterized in that** at least one of the tackifier resins is a hydrocarbon resin having an MMAP of at most +80°C.

6. Self-adhesive article according to any of the preceding claims, **characterized in that** at least one of the tackifier resins is a hydrocarbon resin having an ASTM E28 resin softening temperature of at least +90°C, preferably at least +110°C, and at most +140°C, preferably at most +120°C.

7. Self-adhesive article according to any of the preceding claims, **characterized in that** the adhesive comprises at least 5 wt% and at most 15 wt%, preferably at most 12 wt%, of plasticizing resin, based in each case on the total adhesive.

8. Self-adhesive article according to Claim 7, **characterized in that** the plasticizing resin has a melt viscosity as per Test VI in the description of at least 25 Pa s.

9. Self-adhesive article according to any of the preceding claims, **characterized in that** the adhesive comprises at most 1 wt%, preferably 0 wt%, based on the total adhesive, of low-viscosity plasticizers having a melt viscosity as per Test VI in the description of below 25 Pa s.

10. Self-adhesive article according to any of the preceding claims, **characterized in that** it is strippable.

11. Self-adhesive article according to any of the preceding claims, **characterized in that** it is an adhesive strip.

12. Use of the self-adhesive article according to any of Claims 1 to 11 for bonding on woodchip wallpaper, especially coated woodchip wallpaper, textured wallpapers, wood, panels, wall boards, wainscoting, wood veneers, or on plaster, especially coated plaster.

## Revendications

1. Article autocollant, contenant
(i) au moins un matériau de support qui contient au moins une couche expansée ayant une première surface A et une seconde surface B,
ladite au moins une couche expansée du matériau de support présentant
- une épaisseur d'au moins 500 µm, de préférence au moins 850 µm, et d'au maximum 1 800 µm, de préférence au maximum 1 500 µm,
- une densité d'au moins 30 kg/m³, de préférence au moins 45 kg/m³, et d'au maximum 120 kg/m³, de préférence au maximum 100 kg/m³,
- une résistance à la traction selon ISO 1926, vitesse d'essai 500 mm/min, en direction du décollement, d'au moins 500 kPa, de préférence au moins 700 kPa,
- un allongement à la traction selon ISO 1926, vitesse d'essai 500 mm/min, en direction du décollement, d'au moins 300 %, de préférence au moins 500 %, ainsi
- qu'une dureté à l'écrasement selon ISO 3386-1, 50 % de profondeur d'écrasement, d'au moins 50 kPa, de préférence au moins 70 kPa, et d'au maximum 300 kPa, de préférence au maximum 200 kPa,
(ii) une couche de matière autoadhésive HKA, qui est affectée à la surface A,
(iii) une couche de matière autoadhésive HKB, qui est affectée à la surface B,
(iv)en option une ou plusieurs couches supplémentaires,
**caractérisé en ce que** les couches de matières autoadhésives HKA et HKB constituent une association de couches de matières autoadhésives 1 ou une association de couches de matières autoadhésives 2,
dans le cas de l'association de couches de matières autoadhésives 1 la couche de matière autoadhésive HKA étant une couche de matière autoadhésive HKA1 qui contient
i. au moins un composant élastomère du type d'un copolymère à blocs polybutadiène-polyvinylaromatiques, en une proportion, par rapport à la matière adhésive totale, de 42 % en poids à 55 % en poids et ayant une teneur en diblocs, par rapport à la teneur totale en copolymères à blocs, de 32 % en poids à 55 % en poids, de préférence à 50 % en poids,
ii. au moins une résine adhésive, qui est une résine hydrocarbonée ayant une valeur DACP, selon l'essai III de la description, d'au moins +5 °C et d'au maximum +50 °C, et une valeur MMAP, selon l'essai IV de la description, d'au moins +50 °C et d'au maximum +85 °C,
iii. en option au moins une résine souple en une proportion de 0 % en poids à 15 % en poids, par rapport à la matière adhésive totale,
iv. en option d'autres additifs,
et dans le cas de l'association de couches de matières autoadhésives 1 la couche de matière autoadhésive HKB étant une couche de matière autoadhésive HKB1 qui présente une résistance à la traction d'au moins 9 Mpa, de préférence d'au moins 11 MPa,
et dans le cas de l'association de couches de matières autoadhésives 2 la couche de matière autoadhésive HKA étant une couche de matière autoadhésive HKA2 et la couche de matière autoadhésive HKB étant une couche de matière autoadhésive HKB2, qui contiennent chacune, mais indépendamment l'une de l'autre,
v. au moins un composant élastomère du type d'un copolymère à blocs butadiène en une proportion, par rapport à la matière adhésive totale, de 38 % en poids à 48 % en poids et ayant une teneur en diblocs, par rapport à la teneur totale en copolymères à blocs, de 10 % en poids à 30 % en poids,
vi. au moins une résine adhésive, qui est une résine hydrocarbonée ayant une valeur DACP, selon l'essai III de la description, d'au moins +5 °C et d'au maximum +50 °C, et une valeur MMAP, selon l'essai IV de la description, d'au moins +50 °C et d'au maximum +85 °C, vii.au moins une résine souple en une proportion de 2 % en poids à 15 % en poids, par rapport à la matière adhésive totale,
viii. en option d'autres additifs.

2. Article autocollant selon la revendication 1, **caractérisé en ce que** la couche de matière autoadhésive HKB1 contient
a) au moins un composant élastomère du type d'un copolymère à blocs polybutadiène-polyvinylaromatiques en une proportion, par rapport à la matière adhésive totale, de 40 % en poids à 60 % en poids et ayant une teneur en diblocs, par rapport à la teneur totale en copolymères à blocs, de 10 % en poids à 30 % en poids,
b) au moins une résine adhésive, qui est une résine hydrocarbonée ayant une valeur DACP d'au moins +5 °C et d'au maximum +50 °C et une valeur MMAP d'au moins +50 °C et d'au maximum +85 °C,
c) en option au moins une résine souple en une proportion de 0 % en poids à 12 % en poids, par rapport à la matière adhésive totale,
d) en option d'autres additifs.

3. Article autocollant selon l'une quelconque des revendications précédentes, **caractérisé en ce qu'**au moins l'un des composants élastomères est constitué à raison d'au moins 90 % en poids, par rapport à la teneur totale en copolymères à blocs, d'au moins un copolymère à blocs polybutadiène, ledit au moins un copolymère à blocs polybutadiène contenant des blocs de polymères majoritairement formés par polymérisation de composés vinylaromatiques (blocs A), de préférence de styrène, et ceux majoritairement formés par polymérisation de 1,3-butadiène (blocs B).

4. Article autocollant selon l'une quelconque des revendications précédentes, **caractérisé en ce qu'**au moins l'une des résines adhésives est une résine hydrocarbonée ayant une valeur DACP d'au maximum +45 °C.

5. Article autocollant selon l'une quelconque des revendications précédentes, **caractérisé en ce qu'**au moins l'une des résines adhésives est une résine hydrocarbonée ayant une valeur MMAP d'au maximum +80 °C.

6. Article autocollant selon l'une quelconque des revendications précédentes, **caractérisé en ce qu'**au moins l'une des résines adhésives est une résine hydrocarbonée ayant une température de ramollissement de résine selon ASTM E28 d'au moins +90 °C, de préférence d'au moins +110 °C, et d'au maximum +140 °C, de préférence d'au maximum +120 °C.

7. Article autocollant selon l'une quelconque des revendications précédentes, **caractérisé en ce que** la matière adhésive contient au moins 5 % en poids, et au maximum 15 % en poids, de préférence au maximum 12 % en poids, de résine souple, chaque fois par rapport à la matière adhésive totale.

8. Article autocollant selon la revendication 7, **caractérisé en ce que** la résine souple présente une viscosité à chaud, selon l'essai VI de la description, d'au moins 25 Pa.s.

9. Article autocollant selon l'une quelconque des revendications précédentes, **caractérisé en ce que** la matière adhésive contient au maximum 1 % en poids, de préférence 0 % en poids, par rapport à la matière adhésive totale, de plastifiants peu visqueux ayant une viscosité à chaud, selon l'essai VI de la description, inférieure à 25 Pa.s.

10. Article autocollant selon l'une quelconque des revendications précédentes, **caractérisé en ce qu'**il est pelable.

11. Article autocollant selon l'une quelconque des revendications précédentes, **caractérisé en ce qu'**il est un ruban adhésif.

12. Utilisation de l'article autocollant selon l'une quelconque des revendications 1 à 11 pour le collage sur papier peint ingrain, en particulier papier peint ingrain enduit, papiers peints structurés, bois, panneaux, panneaux muraux, lambris, bois de placage ou sur enduit, en particulier enduit peint.
